# EUROPÄISCHE PATENTSCHRIFT

(11) **EP 2 542 376 B1**
(45) Veröffentlichungstag und Bekanntmachung des Hinweises auf die Patenterteilung: **04.06.2014**
(21) Anmeldenummer: 11710421.6
(22) Anmeldetag: 01.03.2011
(51) Int. Cl.: B23Q 1/00, B23Q 3/06, B23Q 1/48

(54) **BEARBEITUNGSMASCHINE**
Machining unit
Machine de traitement

(30) Priorität: 21.05.2010 DE 102010021010; 08.09.2010 DE 102010044781; 08.09.2010 DE 102010044783; 02.03.2010 DE 102010009947
(43) Veröffentlichungstag der Anmeldung: 09.01.2013
(73) Patentinhaber: Grob-Werke GmbH & Co. KG, 87719 Mindelheim (DE)
(72) Erfinder: GROB, Burkhart, 86825 Bad Wörhishofen (DE); HÖBEL, Alfred, 87493 Lauben (DE)
(74) Vertreter: Pfister, Stefan Helmut Ulrich
(86) Internationale Anmeldenummer: PCT/EP2011/000990
(87) Internationale Veröffentlichungsnummer: WO 2011/107252

(56) Entgegenhaltungen:
- EP-A1- 1 728 574
- WO-A1-2006/003683
- DE-U1-202006 004 942
- US-A1- 2007 057 135

## Beschreibung

Die Erfindung betrifft eine Bearbeitungsmaschine für das Bearbeiten eines oder mehrerer Werkstücke, wobei das Werkstück in der Bearbeitungsmaschine auf oder in einem nicht drehbaren oder, insbesondere um mindestens eine Achse drehbaren Werkstücktisch mittelbar oder unmittelbar durch eine Spannvorrichtung gehalten ist.

Des Weiteren umfasst die Erfindung auch eine Bearbeitungsmaschine für das Bearbeiten eines oder mehreren Werkstücke mit einem nicht drehenden oder, insbesondere durch eine Werkzeugspindel rotatorisch angetriebenen Bearbeitungswerkzeug, wobei das Bearbeitungswerkzeug in einer Werkzeugaufnahme mittelbar oder unmittelbar durch eine Werkzeugspannvorrichtung gehalten ist.

Die gattungsgemäßen Bearbeitungsmaschinen sind zum Beispiel Teil von komplexeren, insbesondere spanabhebenden Bearbeitungslinien oder auch in bevorzugt flexibel einsetzbaren Bearbeitungszentren realisiert. Die gattungsgemäßen Bearbeitungsmaschinen weisen in der Regel eine hohe Rotationsgeschwindigkeit der spannabhebenden Bearbeitungswerkzeuge auf. Auch die sonstigen bei der Bearbeitung auftretenden Kräfte sind durchaus beachtlich, weswegen für eine exakte Bearbeitung des Werkstückes eine sichere, lagegenaue Fixierung des aufzuspannenden Werkstückes notwendig ist. Die Fixierung erfolgt dabei durch die Spannvorrichtung, die die erheblichen Arbeitskräfte sicher abzuleiten hat.

Dabei ist es bekannt, das Werkstück entweder mittelbar oder unmittelbar am Werkstücktisch oder an Elemente des Werkstücktisches zu befestigen, wofür eine Spannvorrichtung dient. Bei einer unmittelbaren Befestigung des Werkstückes wirkt dabei die Spannvorrichtung unmittelbar auf das Werkstück ein, bei einer mittelbaren Befestigung ist das Werkstück zum Beispiel auf einem Werkstückträger oder einer Palette aufgespannt und die Spannvorrichtung wirkt mit dem Werkstückträger oder der Palette in geeigneter Weise zusammen. Von einer Spannvorrichtung für das Werkstück wird daher zum Einen eine möglichst hohe Positionsgenauigkeit, zum Anderen eine hohe Stabilität, also eine hohe Spannkraft erwartet, um eine möglichst ausschussfreie und hochgenaue Bearbeitung sicherzustellen.

Das gleiche Anforderungsprofil wird aber auch an ein für die Werkzeugaufnahme der Bearbeitungsmaschine eingespannten Bearbeitungswerkzeug gestellt.

Eine solche Bearbeitungsmaschine ist z.B. aus dem Patentdokument DE 20 2006 004 942 U bekannt.

Im Stand der Technik ist es bekannt, sowohl das zu bearbeitende Werkstück (mittelbar oder unmittelbar), wie auch das der Bearbeitung dienende Bearbeitungswerkzeug (mittelbar oder unmittelbar) durch hydraulische Mittel zu halten beziehungsweise zu spannen.

Hydraulische Spannmittel haben den Vorteil, dass mit Ihnen auf verhältnismäßig kleinem Raum hohe Kräfte entfaltet werden können.

Nachteilig allerdings ist, dass das Verlegen der Hydraulikleitungen, die entsprechend hohem Druck (mehrere 100 bar) standhalten müssen, zum Einen aufwendig ist und auch entsprechend wartungsanfällig ist. Der Werkstücktisch ist für Bearbeitungszwecke im Raum entlang mindestens einer Raumachse, in der Regel entlang mehrerer Raumachsen, positionierbar. Die Hydraulikleitung muss daher ausreichend flexibel ausgebildet sein, um diesen Bewegungen im Raum folgen zu können. Oftmals ist der Werkstücktisch aber auch im Raum drehbar und auch in diesen verschwenkten Stellungen ist eine zuverlässige Hydraulikzuführung zu gewährleisten, was bei den genannten verdrehbaren Elementen nur mit erheblichem Aufwand sowohl bei der Konstruktion wie auch bei der Wartung zu erreichen ist.

Alternativ ist der Einsatz von pneumatischen Werkstückspannungen bekannt, bei welchen aber keine so hohen Haltekräfte erreicht werden können.

Dabei besteht auch das Problem, dass die Positionsabfragen, zum Beispiel Werkstück gespannt oder Bearbeitungswerkzeug gespannt, nur indirekt über den Druck oder über andere sonstige aufwendige Einrichtungen abgefragt werden können.

Schlussendlich ist auch der gerätetechnische Aufwand für das Verlegen einer Hydraulikanordnung beachtlich, da neben einer Verrohrung auch ein entsprechendes Pumpaggregat sowie Ventile und Ansteuerung der Ventile notwendig sind.

Ausgehend von diesem Stand der Technik ist es Aufgabe der Erfindung, eine Verbesserung für das Spannen von diversen Elementen, zum Beispiel Werkstück oder Bearbeitungswerkzeug, bei Bearbeitungsmaschinen vorzuschlagen.

Zur Lösung dieser Aufgabe wird von einer Bearbeitungsmaschine wie eingangs beschrieben ausgegangen und vorgeschlagen, dass an dem Werkstücktisch ein Elektromotor vorgesehen ist, dessen erzeugte Kraft, Drehmoment und/oder Drehimpuls mittelbar oder unmittelbar auf das Werkstück wirkt. Anstelle eines Hydraulikoder Pneumatikantriebes wird nun ein Elektromotor eingesetzt, der die Spannvorrichtung betätigt beziehungsweise der Elektromotor wirkt mit einem Spannelement der Spannvorrichtung zusammen. Der Pfiff ist aber nicht nur auf das Spannen eines Werkstückes beschränkt, sondern kann in gleicher Weise auch für eine Werkzeugspannvorrichtung eingesetzt werden. Dabei umfasst die Werkzeugspannvorrichtung mindestens ein Werkzeugspannelement, welches mit dem Bearbeitungswerkzeug mittelbar oder unmittelbar zusammenwirkt, ein Elektromotor für das Erzeugen der Spannkraft vorgesehen ist, der in Wirkverbindung mit dem Werkzeugspannelement steht; und eine über den von dem Elektromotor aufgenommenen Motostrom erfolgende Spannkraftkontrolle. Der Vorschlag erlaubt es bei Bedarf, die gesamte Hydraulik aus einer Bearbeitungsmaschine zu verbannen. Insbesondere ermöglicht der erfindungsgemäße Vorschlag, dass die sehr viel einfacher zu handhabenden elektrischen Leitungen verwendbar sind, die in den ebenfalls längsbeweglichen oder rotatorisch ausgelegten Werkzeugtisch zu führen sind, was durch entsprechende Medienleitungen, Kabelschleppvorrichtung und so weiter, sehr viel einfacher realisierbar ist.

Grundsätzlich eröffnet sich aber nach wie vor die Möglichkeit in speziellen Anwendungsfällen trotzdem ein hydraulisches Spannen des Werkstückes (mittelbar oder unmittelbar) oder des Bearbeitungswerkzeuges (mittelbar oder unmittelbar) zu realisieren. Anstatt ein zentrales Hydraulikaggregat vorzusehen, wird dezentral, zum Beispiel in der Werkzeugaufnahme oder am Werkstücktisch, von dem Elektromotor eine entsprechende Hydraulikpumpe betrieben, die ihrerseits dann in geeigneter Weise das Hydraulikmedium mit dem entsprechenden Druckniveau den hydraulisch wirkenden Spannelementen zur Verfügung stellt.

Es ist ein erheblicher Vorteil der Bearbeitungsmaschine, dass diese in diesem Bereich sehr flexibel einsetzbar ist und dem Elektromotor eine universale Kraftquelle zur Verfügung steht, die über bekannte mechanische Bauteile, wie Getriebe, Ketten, Ritzelanordnung, Zahnräder, Winkelgetriebe und so weiter, Kraft und Drehmoment an die jeweils benötigten Orte zu leiten vermag. Es ist aber auch möglich mit Hilfe des Elektromotors zum Beispiel eine Hydraulik- oder Pneumatikpumpe oder andere Elemente anzutreiben und diese Kraft- beziehungsweise Energiereservoirs dann in geeigneter Weise in der erfindungsgemäßen Bearbeitungsmaschine zu nutzen.

Überraschenderweise eröffnet das vorgeschlagene Konzept nicht nur eine erhebliche Verbesserung der Spannvorrichtung, sondern weitet erheblich den Einsatzbereich einer erfindungsgemäßen Bearbeitungsmaschine aus. Mit Hilfe des erfindungsgemäßen Vorschlags wird der Spannvorgang erheblich verbessert. So wird vorgeschlagen, dass die Spannvorrichtung mindestens ein Spannelement umfasst, welches mit dem Werkstück mittelbar oder unmittelbar zusammenwirkt und ein Elektromotor für die Erzeugung der Spannkraft vorgesehen ist, der in Wirkverbindung mit dem Spannelement steht. Der Einsatz des Elektromotors im Werkstücktisch erlaubt aber auch eine dauerhafte Rotation des Werkstückes. So ist mit geringem Aufwand eine Umrüstung der erfindungsgemäßen Bearbeitungsmaschine durchzuführen und der Elektromotor dient dann an dem Werkstücktisch als Rotationsantrieb für das Werkstück, um zum Beispiel rotatorische Schleif- oder Drehbearbeitung am Werkstück vorzusehen. Hierfür wird dann das Bearbeitungswerkzeug zum Beispiel in einer ansonsten in Rotation versetzten Werkzeugspindel feststehend eingespannt und wie bei einer Drehbank gegen das Werkstück angestellt.

Es ergeben sich folgende Vorteil einer solchen nachfolgend auch als mechatronische Spannvorrichtung beschriebenen Anordnung.

Eine, wie beschrieben, ausgestattete Maschine beziehungsweise deren Weiterbildung besitzt grundsätzlich eine höhere Verfügbarkeit, da sie nicht nur für klassische Bohr- oder Fräsbearbeitungen einsetzbar ist, sondern mit dieser auch Drehbearbeitungen möglich sind.

Es besteht eine schnelle Inbetriebnahme der Spannvorrichtung in Verbindung mit einer Beladeeinrichtung.

Die bei den Lösungen nach dem Stand der Technik bekannten Drehverbindungen oder Drehverteilungen für die hydraulischen oder pneumatischen Leitungen werden durch den erfindungsgemäßen Vorschlag vollständig vermieden. Es besteht kein Verschleiß von bewegten Dichtungen, das Drehen und Positionieren des Werkstücktisches ist mit geringeren Kräften einfacher möglich.

Grundsätzlich erlaubt die Bearbeitungsmaschine eine schnelle Umrüstbarkeit der Maschine auf andere Werkstücke und auch andere Bearbeitungsprozesse.

Durch den Vorschlag ist es möglich, eine Spannkraftkontrolle über den von dem Elektromotor aufgenommenen Motorstrom zu realisieren.

Es werden so Leckagen im Hydrauliksystem vermieden, auch der Wartungsaufwand für das Nachziehen der Hydraulikverschraubung und so weiter entfällt. Da auch keine sonstigen Hydraulikschläuche mehr verbaut werden, müssen die Hydraulikschläuche auch nicht in regelmäßigen Austauschintervallen gewechselt werden. Es entfällt auch der verhältnismäßige hohe Aufwand für Tieflochbohrungen in der Grundplatte der Vorrichtung, die zur Aufnahme der Hydraulikleitungen vorgesehen waren.

Da durch den Vorschlag im Werkstücktisch ein bevorzugt rotatorisch wirkender Spannantrieb zur Verfügung steht, können die verschiedensten Spannvorrichtungen eingesetzt werden. Es ist zum Beispiel möglich, einzelne Spannelemente anzuordnen oder aber die Spannvorrichtung als Schraubstock oder Drei- oder Mehrbackenfutter zu realisieren. Auch der Einsatz einer Aufsatzspindel oder Ähnlichem ist möglich.

Der Vorschlag verbessert die Umweltverträglichkeit, da auf das Hydrauliköl verzichtet wird. Man erreicht dabei auch eine höhere Energieeffizienz.

In einer bevorzugten Variante ist vorgesehen, dass die von dem Elektromotor angetriebene Motorwelle einen Adapteranschluss aufweist, der zur wahlweisen Verbindung der Motorwelle mit einem Kraftübertragungsmittel für das oder die Spannelemente oder zur Verbindung der Motorwelle mit einem Drehfutter dient, welches der mittelbaren oder unmittelbaren Aufnahme des Werkstückes für rotatorische Schleif- oder Drehbearbeitungen am Werkstück dient.

So ist der Elektromotor im Werkstücktisch ortsfest, gegebenenfalls in dem Rundtisch mit integriert, ausgebildet. In dieser Ausgestaltung erbringt der Elektromotor seine Funktion als Spannantrieb für die Spannelemente der Spannvorrichtung auch dann, wenn das Werkstück auf dem Werkstücktisch aufgespannt um eine Bearbeitungsachse (rechtwinklig zur Aufspannebene) gedreht wird. Die die Spannelemente tragende Tragplatte ist so ausgebildet, dass diese zum Einen exakt in seiner Lage am Werkstücktisch festlegbar ist, aber in einfacher Weise auch demontierbar ist, um so auch gleichzeitig die von der Tragplatte getragene Spannvorrichtung abzubauen. Da der Elektromotor ortsfest bleibt, ist ein Adapteranschluss als Kupplung vorgesehen, der bei abgehobener Tragplatte dann frei wird. Auf dem Adapteranschluss ist dann zum Beispiel ein Drehfutter montierbar, um so ein Werkstück aufzunehmen und für eine rotatorische Schleifoder Drehbearbeitung vorzuhalten.

### Spannen von Werkstücken

Gemäß einer bevorzugten Variante, ist es vorgesehen, dass der Elektromotor, vorzugsweise als Zentralantrieb, mehrere Spannelemente über das wenigstens eine Kraftübertragungsmittel antreibt. In dieser Variante ist es dann so, dass der Elektromotor beispielsweise unterhalb der Spannebene angeordnet ist und ein Kraftübertragungsmittel mehrere Spannelemente gleichzeitig anzutreiben vermag. Hierbei ist der Aufwand für den Elektromotor und dessen Verkabelung relativ gering, allerdings ist es schwieriger individuelle Lösungen bezüglich der Spannkraft zu verwirklichen.

Demzufolge schlägt eine weitere Variante vor, dass für jedes der Spannelemente ein Elektromotor als Antriebsmittel zur Erzeugung der Spannkraft vorgesehen ist. Nun lassen sich die einzelnen Elektromotoren auch mit unterschiedlichen Kräften beziehungsweise Momenten steuern. Dabei kann auch die Baugröße des einzelnen Elektromotors geringer gehalten werden, als beispielsweise bei einem Elektromotor als Zentralantrieb. Beide Varianten sind allerdings von der Erfindung umfasst und lösen das gestellte Problem in hervorragender Weise und tragen zu den vorher beschriebenen, positiven Effekten bei.

Eine Effizienzsteigerung der Bearbeitungsmaschine und ihren Weiterbildungen beziehungsweise Ausführungsformen und Ausführungsformkombinationen, wird unter Anderem auch dadurch erreicht, dass anstelle aufwändiger Hydraulikkomponenten ein oder mehrere Elektromotor/en als Antrieb/e, insbesondere als mittelbare oder unmittelbare Spann- oder als Drehantrieb/e verwendet wird/werden.

Als günstig wird angesehen, wenn als Antrieb ein Elektromotor, insbesondere Servomotor Verwendung findet. Dieser Elektromotor beziehungsweise Servomotor kann insbesondere als Synchron-, Asynchron- oder Gleichstrommotor ausgebildet sein. Vorteilhaft bei der Verwendung von Servomotoren ist deren kompakte Bauform, der robuste Aufbau und die Möglichkeit zum Betrieb in einem geschlossenen Regelkreis. Der Betrieb kann dabei momentengeregelt, geschwindigkeitsgeregelt oder positionsgeregelt sein.

Als vorteilhafte Weiterbildung wird angesehen, wenn der Antrieb über einen geberlosen Synchron- oder Asynchronmotor erfolgt. Insbesondere ein permanentmagneterregter Synchronmotor (PMSM) ist hierbei bevorzugt. Dabei ist von dem Vorschlag gleichermaßen die Anordnung des/der Permanentmagnete/n als vergrabene/r Magnet/e oder als Oberflächenmagnet/e am Rotor umfasst, wobei die Verwendung vergrabener Magnete/n im Rotor als besonders vorteilhaft angesehen wird, da mechanische Belastungen im Rotorblechpaket auftreten und nicht an der Oberfläche. Zudem sind geringere Verluste im Permanentmagneten zu verzeichnen. Der Einsatz von Permanentmagneten auf oder in dem Rotor erspart die bei Synchronmaschinen sonst vorhandene Erregerwicklung.

Als Vorteil der Verwendung geberloser Motoren, insbesondere von Synchronmotoren wird angesehen, dass hier auf die zusätzliche Anordnung von Gebern oder Sensoren für die Rotorlagebestimmung verzichtet werden kann und sich die Baumaße entsprechend verringern. In den erfindungsgemäßen Bearbeitungsmaschinen beziehungsweise den hierin vorgesehenen Werkzeug- beziehungsweise Werkstückspann- beziehungsweise -drehvorrichtungen ist der Bauraum für die einzelnen Komponenten knapp bemessen, um eine möglichst kompakte Bauart des gesamten Bearbeitungszentrums realisieren zu können. Neben der Steigerung des Wirkungsgrades der Dynamik herkömmlicher Bearbeitungsmaschinen kann durch die Verwendung von geberlosen Motoren der Bauraum beziehungsweise können die Bauraumanforderungen seitens des Antriebes optimiert werden.

In einer als bevorzugt angesehenen Ausführungsform der Bearbeitungsmaschine, ist eine geberlose Rotorlagebestimmung, insbesondere eine geberlose Stillstandslageerkennung vorgesehen, die sich insbesondere über den geberlosen Synchronmotor realisieren lässt. So kann in einem geberlosen Synchronmotor beispielsweise die Position des Rotors mit Hilfe einer Anisothropie der resultierenden Induktivität in den verwendeten Statorspulen des Stators geschätzt werden. Beim Betrieb des Synchronmotors können abhängig von der Rotorlage in den Statorspulen verschiedenen resultierende Induktivitäten gemessen werden, über die sich die Position des Rotors abschätzen lässt. Als vorteilhaft wird in diesem Zusammenhang angesehen, wenn die Rotorlagebestimmung beziehungsweise die Stillstandslageerkennung software- oder NC-gesteuert durchführbar ist. Eine entsprechende Integration in die Maschinensteuerung, zum Beispiel eine Mikrocontroller umfassende Maschinensteuerung kann auf einfache Art und Weise realisiert werden.

Eine als günstig angesehene Möglichkeit zur Bestimmung der Rotorlage beziehungsweise der Stillstandslage sieht beispielsweise vor, dass dem Ansteuersignal zum Anlegen der Statorströme für die Statorspulen Messsignale so überlagert werden, dass zusätzlich zum Antriebsmagnetfeld ein Wechselmagnetfeld erzeugt wird, wobei die durch die Mehrsignale hervorgerufenen Stromflüsse durch die Statorspulen von der rotorlageabhängigen resultierenden Induktivität des Synchronmotors abhängt. Die resultierende Induktivität des Synchronmotors hängt von der Position des Rotors ab. Dabei basiert das Verfahren zur geberlosen Rotorlagebestimmung auf der Detektion der magnetischen Anisotopie von Längs- und Querinduktivität des Motors. Wird eine sich schnell ändernde Spannung an den Motor angelegt, so fällt die Spannung im Ständerstrang fast ausschließlich an der Rotorlageabhängigen Induktivität ab. Der erregte Strom wird somit durch die Rotorlage moduliert und kann dementsprechend ausgewertet werden. Die Signalstärke ist proportional zur Differenz von Längs- und Querinduktivität.

Die Eingangs- und Ausgangssignale werden von einer Steuerbeziehungsweise Messsoftware beziehungsweise der NC-Steuerung verarbeitet, um hierüber die Rotorlage beziehungsweise die Stillstandslage zu definieren. Diese definiert wiederum die Werkzeug-Einsatzposition beziehungsweise die Werkstück-Bearbeitungsposition beziehungsweise die Position des durch einen solchen Elektromotor angetriebenen Spannelements oder Spannvorrichtung für das Werkstück. Gegebenenfalls ist in der Maschinensteuerung für die Auswertung der Rotorlage ein separater Schaltkreis beziehungsweise ein hierfür programmierter Mikrocontroller vorgesehen.

Die Verwendung von Synchronmotoren hat neben der Reduzierung des für den Antrieb notwendigen Bauraumes weitere Vorteile. So werden die Installationskosten insgesamt reduziert, da Geberleitung, Geber und Geberschnittstelle wegfallen. Die Synchronmotoren ermöglichen eine hohe Dynamik und eine schlupffreie Bewegung. Neben dem reduzierten Platzbedarf weisen diese auch noch ein geringes Gewicht, dabei jedoch einen hohen Wirkungsgrad und eine hohe Verfügbarkeit auf. Die Lagebestimmung kann auf einfache Art und Weise in die Maschinensteuerung der erfindungsgemäßen Bearbeitungsmaschine integriert werden, eine Umoder Nachrüstbarkeit bestehender Maschinen ist gegeben.

Ein weiterer Aspekt der Bearbeitungsmaschine ist dadurch angegeben, dass der Elektromotor von einer Steuerung, vorzugsweise von der Steuerung der Bearbeitungsmaschine als NC-Achse überwacht wird, wobei die Steuerung anhand dieser Daten die exakte Lage beziehungsweise die exakte Stellung des Spannelementes erkennt beziehungsweise ableitet und/oder die Steuerung anhand der festgestellten Daten beziehungsweise anhand des festgestellten Momentes die eingeprägte bzw. eingetragene Kraft des bzw. der Spannelemente(s) erkennt. Diese Variante der Erfindung ist insofern von Vorteil, da es jetzt gelingt - im Gegensatz zu bisher aufwendigen Kontrolleinrichtungen zur Überprüfung der entsprechenden Lage bzw. auch der eingetragenen Drehmomente bzw. der Kraft - anhand der Überwachung der NC-Achse bzw. des Elektormotors und dessen Parametern bezüglich Stromaufnahme, in einfacher Weise die erforderlichen Daten zur Verfügung zu stellen und zwar in den gewünschten Auflösungen bezüglich der einzelnen Spannelemente. Hiermit lässt sich auch der steuerungstechnische Aufwand bzw. der überwachungstechnische Aufwand einer solchen Bearbeitungsmaschine durch den Einsatz eines Elektromotors in Verbindung mit der Steuerung erheblich reduzieren. Des Weiteren werden die festgestellten Daten exakt auf die einzelnen Spannelemente zugeordnet, wodurch eine gegebenenfalls insgesamt günstigere Ansteuerung der einzelnen Elemente möglich wird.

Von Vorteil ist es, wenn ein Kraftübertragungsmitttel, wie z. B. ein Zahnriemen, eine Kette oder ein Getriebe, vorgesehen ist, dass die vom Elektromotor erzeugte Kraft bzw. das erzeugte Drehmoment auf die Spannelemente bzw. die Spannvorrichtung überträgt. Dabei ist es von Vorteil, wenn beispielsweise eine Kette vom Elektromotor zum Spannmittel über Ritzel geführt ist, um die Kräfte dort zu übertragen. Die Einprägung der Kraft kann dann entweder dem Spannmittel selbst durch dort integrierte Elemente bestimmt werden oder aber durch die direkt eingeprägte Kraft über den Elektromotor.

Vorgesehen ist auch eine mögliche Lösung, bei der der Elektromotor auf einem Motorwellenanschluss an der Spannvorrichtung bzw. am Spannmittel auf der gleichen Symmetrieachse oder parallel dazu angeordnet ist. Selbstverständlich ist auch eine Variante umfasst, bei der der Elektromotor winklig, bevorzugt rechtwinklig zur Symmetrieachse der Spannvorrichtung bzw. des Spannmittels orientiert angeordnet ist.

Es ist weiterhin vorgesehen, dass das Spannmittel einen Freilauf, eine Kupplung, bevorzugt als Rutschkupplung ausgebildet, oder dergleichen aufweist, um die zu übertragende Kraft zu begrenzen. Hier kann man beispielsweise den Freilauf bzw. die Kupplung als Rutschkupplung derart einstellen, dass jedes Spannmittel unterschiedliche Kräfte oder aber auch gleiche Kräfte einprägt. Selbstverständlich ist es auch möglich im Spannmittel beispielsweise eine Feder oder ein Federpaket vorzusehen, dass generell so wirkt, dass die notwendige Spannungskraft erzeugt wird. Der Elektromotor im Zusammenwirken mit dem Freilauf bzw. der Kupplung wirkt dann so, dass diese nur für das Lösen des Werkstückes, nach der erfolgten Bearbeitung eingesetzt werden und die dazu notwendige Kraft einprägen, um das Federpakt bzw. die Feder dann in eine angehobenen Position zu bewegen. Gleiches ist selbstverständlich auch möglich, wenn man anstelle einer Feder dort einen Hydraulikzylinder vorsieht, der dann direkt am oder im Spannmittel vorgesehen ist. Auf diese Variante wird allerdings noch später eingegangen werden.

An dem Spannmittel ist wenigstens eine Spannpratze vorgesehen, die zur Spannung des Werkstückes dient. Die Spannpratze ist in dem Sinne zu verstehen, dass sie an dem Werkstück oder aber an dem Werkzeug derart angreift, dass ein gewisser Formschluss vorhanden ist, in dem beispielsweise am Werkstück oder am Bearbeitungswerkzeug entsprechende Ausnehmungen bzw. Nuten oder Rinnen vorhanden sind, in die die Spannpratze einzugreifen vermag. Der Druck drückt dann das Werkstück bzw. Werkzeug entweder auf den Bearbeitungstisch bzw. in oder auf die Werkzeugaufnahme.

Wie bereits erwähnt, ist es von Vorteil, dass an bzw. in dem Spannelement, vorzugsweise in dem Spannmittel, ein druckerzeugendes Element, wie z. B. eine Druckfeder oder ein Federpaket vorgesehen ist, das im entkoppelten Zustand die Spannpratze in die Spannposition drückt bzw. bewegt und im gekoppelten Zustand der Elektromotor die Spannpratze in Ihre Ausgangs- bzw. Ruheposition bewegt. Als Ausgangs- bzw. Ruheposition ist hier die Position zu verstehen, in der das Werkstück entnommen werden kann.

Gemäß einer Variante der Bearbeitungsmaschine ist es außerdem vorgesehen, dass an bzw. in dem Spannmittel ein Rückzugselement, wie z. B. eine Zugfeder vorgesehen ist, die die Spannpratze im entkoppelten bzw. nicht gespannten Zustand in einer Ausgangsposition bewegt. Dabei handelt es sich um die Umkehrlösung der vorher beschriebenen Variante, bei der die Druckfeder bzw. ein Federpaket die Spannpratze während des Spannvorganges mit Druck beaufschlagt und nur zum Lösen die Spannpratze durch die Kraft des Elektromotors in eine Ausgangsposition zurückbewegt worden ist. In der jetzt beschriebenen Variante wird genau der umgekehrte Weg beschritten, indem nämlich die Druckfeder beispielsweise auf Zug belastet wird, während die Spannpratze das Werkstück spannt und dann im entkoppelten Zustand die Zugfeder die Spannpratze in die Ausgangsstellung zurückholt.

Es wurde gefunden, dass es von Vorteil ist, wenn die Spannpratze einen nasenartig ausgebildeten Spannansatz aufweist, der in Spannrichtung winklig der Spannebene zugewandt um 1° bis 5°, bevorzugt um 2° abweichend von der Parallelen zur Spannebene angeordnet ist. Dadurch wird die Spannpratze bzw. der Spannansatz in Richtung des Werkstückes leicht geneigt, was den Spannvorgang verbessert bzw. das Eingreifen der Spannpratze an dem Werkstück erleichtert. Bezogen auf die Symmetrieachse des Spannelementes befindet sich der Spannansatz in einem Winkel von ca. 90° zu dieser Symmetrieachse mit der bereits beschriebenen Abweichung um 1° bis 5° bzw. bevorzugt 2°, dann abweichend von der 90°-Ebene in Richtung auf das Werkstück zugewandt.

Von Vorteil ist es auch, wenn die Spannpratze im Wesentlichen zur Spannebene bewegbar ist. Damit muss man am Werkstück bzw. an dem Werkstück tragenden Werkstückträger lediglich eine entsprechende Ausnehmung oder Nut vorsehen, mit der das Spannelement dort eingreifen kann.

Eine Weiterbildung der Bearbeitungsmaschine sieht vor, dass das Spannelement als Spannzange ausgebildet ist. Spannzangen werden bevorzugterweise immer dann eingesetzt, wenn beispielsweise an der werkstücktragenden Palette oder am Werkstück selbst bestimme Spannmittel wie Spannbolzen oder dergleichen angeordnet sind, sodass die Spannzange diese Spannmittel umfassen kann. Die Lösung bezüglich des Elektromotors als Antriebsmittel für die Spannmittel kann in dieser Variante ebenfalls ausgenutzt werden.

Eine weitere günstige Ausführungsform schlägt vor, dass das Spannelement kegelstumpfförmig ausgebildet ist und eine Aufnahme aufweist, in die ein Zapfen, der in einer werkstücktragenden Palette oder am zu bearbeitenden Werkstück angeordnet ist, für den Spannvorgang eingeführt wird. In modernen Bearbeitungszentren, in denen die Bearbeitungsmaschine Einsatz finden kann, ist es üblich, werkstücktragende Paletten mit solchen Zapfen zu versehen. Für diesen Fall ist dann das Spannelement korrespondierend zu diesen Zapfen ausgebildet um diese zu umfassen und für den Bearbeitungsvorgang zu spannen. Eine Weiterbildung hiervon schlägt vor, dass die Aufnahme von einer Spannzange umfasst ist, die vorzugsweise Spannklammern im gespannten Zustand gegen bzw. an den Zapfen drückt. Hierbei handelt es sich um eine vorteilhafte Weiterbildung, die den gesamten Spannvorgang noch effizienter gestaltet.

Von Vorteil ist es auch, wenn der Zapfen als Spannmittel einen Zapfenkopf aufweist. Vorteilhafterweise ist dieser Zapfenkopf an dem Zapfenangeformt. Dieser Zapfenkopf kann dabei zumindest teilweise kugelartig oder halbkugelartig ausgebildet sein oder entsprechende Abrundungen oder Fasen aufweisen.

Es wird vorgeschlagen, dass an der Spannzange das Kraftübertragungsmittel, welches von dem Elektromotor angetrieben wird, angreift. Hierbei kann es sich beispielsweise um ein Winkelgetriebe, einen Kettentrieb mit Kette und Ritzel oder um einen Zahnriemen mit einem entsprechen ausgebildeten Ritzel handeln.

Eine günstige Variante sieht auch vor, dass die Spannelemente und/oder die Spannzangen hydraulisch wirkend ausgebildet sind, wobei die druckerzeugende Hydraulikpumpe direkt am oder im Spannelement bzw. an oder in der Spannzange vorgesehen ist. Eingangs wurde der Vorteil einer solchen Lösung schon beschrieben, weil es in einer solchen Ausgestaltung nicht notwendig ist die aufwendigen Hydraulikaggregate vorzuhalten bzw. zu verrohren bzw. mit Schläuchen zu verbinden. Nach der Lösung treibt der Elektromotor eine druckerzeugende Hydraulikpumpe an, die direkt im oder am Spannelement angeordnet ist.

Damit hat man lediglich die Verbindung von der Hydraulikpumpe, gegebenenfalls zum Druckzylinder, am Spannmittel herzustellen, die direkt als Bohrung in dem Spannelement bzw. in der Spannzange zur Verfügung gestellt werden kann. Damit wird sozusagen das Hydraulikelement in das letzte mögliche Element beim Spannvorgang, nämlich in die Spannzange bzw. in das Spannmittel selbst verlegt. Die aufwendige Verrohrung und/oder das Vorsehen von entsprechenden Schlauchverbindungen, Verteilern und dergleichen entfällt komplett. Auch ist es hier nicht notwendig entsprechende gelenkige Elemente vorzusehen, die ein Verschwenken der Bearbeitungsebene ausgleichen müssen. Trotzdem hat man die durch die Hydraulik in der Regel etwas höheren Drücke für das Spannen der Werkstücke zur Verfügung.

Demzufolge wird durch die Lösung erreicht, dass an oder in dem Spannelement eine Hydraulikpumpe vorgesehen ist, die unabhängig von einem zentralen Hydraulikaggregat wirkt und die direkt an oder in dem Spannelement den notwendigen Anpressdruck zur Spannung der Werkstücke bzw. Werkzeuge erzeugt. Hierbei handelt es sich um eine sehr vorteilhafte Lösung, weil - wie bereits erwähnt, die hohen Anpressdrücke direkt im oder am Spannelement erzeugt werden können.

Als wesentlich für die Erfindung wird angesehen, dass eine Spannkraftkontrolle vorgesehen ist, mittels derer das exakte Spannen des Werkstückes überwacht wird. Dabei ist es auch möglich, dass unterschiedliche Spannkräfte an unterschiedlichen Spannelementen eingebracht bzw. eingestellt werden. Auch dies wird durch die Spannkraftkontrolle mit erreicht. Des Weiteren ist es natürlich anhand der Spannkraftkontrolle auch möglich, die exakte Spannung des zu bearbeitenden Werkstückes bzw. des Bearbeitungswerkzeuges festzustellen.

Moderne Bearbeitungszentren und Bearbeitungsmaschinen arbeiten mit einer sogenannten Nullpunktspanneinrichtung. Dabei ist es in der Regel so, dass bestimmte Punkte des zu spannenden Gegenstandes vorgegeben sind, um eine exakte Postionierung bzw. Ausrichtung des Werkstückes an bzw. auf der Bearbeitungsfläche zu erhalten. Demzufolge zeichnet sich eine vorteilhafte Weiterbildung der Bearbeitungsmaschine dadurch aus, dass diese Nullpunktspanneinrichtung zur exakten Positionierung bzw. Ausrichtung des Werkstückes an bzw. auf der Bearbeitungsfläche vorgesehen ist. Dazu korrespondierende Mittel sind natürlich dann an dem jeweiligen Werkstück ebenfalls vorzusehen. Beim Positionieren bzw. bei der Ausrichtung des Werkstückes wir dann anhand dieser zusätzlichen Mittel erkannt, ob das zu bearbeitende Werkstück richtig positioniert ist. Ist es beispielsweise nicht richtig positioniert, kann z. B. anhand der Kontrolleinrichtungen zur Spannungskontrolle überprüft werden, ob alle Spannmittel exakt die vorgesehene Spannung aufweisen. Ist dies nicht der Fall, führt dies dazu, dass erneut gelöst und nochmal positioniert wird, bevor der Spannvorgang erneut wiederholt wird. Von Vorteil ist es auch, wenn an dem Spannmittel bzw. in dessen unmittelbarer Nähe und/oder auf der Bearbeitungsfläche bzw. der Spannfläche wenigstens eine Referenzfläche vorgesehen ist, um die exakte Postionierung des Werkstückes bzw. einer werkstücktragenden Palette zu bestimmen und/oder zu prüfen. Durch die Referenzfläche gelingt es mit etwas geringerem Aufwand als zuvor beschrieben, die exakte Positionierung festzustellen und gegebenenfalls vor dem Spannvorgang zu korrigieren.

Es ist weiterhin von Vorteil, wenn an dem Werkstück und/oder an der Spannfläche wenigstens ein Spannnippel vorgesehen ist, der zum Einen der Positionierung des Werkstückes auf der Spannfläche dient, der aber gleichzeitig auch dem Aufspannen des Werkstückes auf der Spannfläche zusätzlich oder alternativ dient. Daraus ergibt sich die Gelegenheit anhand der Spannnippel deren Positionierung festzustellen, ob das zu bearbeitende Werkstück, was für die Bearbeitungsgenauigkeit von hoher Bedeutung ist, genau richtig positioniert ist.

Ein weiterer Vorteil ist es dabei, wenn an oder in dem Spannnippel wenigstens ein Identifizierungsmittel, wie z. B. ein Datenträger, Transponder oder Barcode vorgesehen ist, der Werkstückinformationen und/oder Werkstückbearbeitungsinformationen aufweist. Hier erhält man sozusagen einen mehrfachen Nutzen dadurch, dass man zum Einen mit Hilfe der Spannippel natürlich die exakte Positionierung vornehmen kann, zum Anderen erhält man gleichzeitig Informationen, ob das zu bearbeitende Werkstück das richtige ist, das gerade für die Bearbeitung benötigt wird und insbesondere werden auch Werkstückbearbeitungsinformationen erhalten, die dann für die Bearbeitung Verwendung finden können. Demzufolge wird hierdurch eine sehr geschickte Variante zur Verfügung gestellt, die die Effekte aus der Erfindung deutlich noch erhöht.

Dieser Datenträger kann dabei zusätzlich oder alternativ z. B. mit einem separaten Befestigungsmittel an dem Spannippel angeordnet sein. Als Befestigungsmittel kann dabei eine Schraube genauso verwendet werden wie das übliche Kleben oder das Vorsehen von entsprechenden Kerbstiften, die das Identifizierungsmittel bzw. den Datenträger befestigen.

In einer Variante ist vorgesehen, dass die von dem Elektromotor angetriebene Motorwelle einen Adapteranschluss aufweist, der zur wahlweisen Verbindung der Motorwelle mit einem Kraftübertragungsmittel für das oder die Spannelemente oder zur Verbindung der Motorwelle mit einem Drehfutter dient, welches der mittelbaren oder unmittelbaren Aufnahme des Werkstückes für rotatorische Schleif- oder Drehbearbeitungen am Werkstück dient.

So ist der Elektromotor im Werkstücktisch ortsfest, gegebenenfalls in dem Rundtisch mit integriert, ausgebildet. In dieser Ausgestaltung erbringt der Elektromotor seine Funktion als Spannantrieb für die Spannelemente der Spannvorrichtung auch dann, wenn das Werkstück auf dem Werkstücktisch aufgespannt um eine Bearbeitungsachse (rechtwinklig zur Aufspannebene) gedreht wird. Die die Spannelemente tragende Tragplatte ist so ausgebildet, dass diese zum Einen exakt in seiner Lage am Werkstücktisch festlegbar ist, aber in einfacher Weise auch demontierbar ist, um so auch gleichzeitig die von der Tragplatte getragene Spannvorrichtung abzubauen. Da der Elektromotor ortsfest bleibt, ist ein Adapteranschluss als Kupplung vorgesehen, der bei abgehobener Tragplatte dann frei wird. Auf dem Adapteranschluss ist dann zum Beispiel ein Drehfutter montierbar, um so ein Werkstück aufzunehmen und für eine rotatorische Schleifoder Drehbearbeitung vorzuhalten.

In der Zeichnung ist die Erfindung insbesondere in einem Ausführungsbeispiel schematisch dargestellt. Es zeigen:
- Fig. 1: eine Seitenansicht der erfindungsgemäßen Bearbeitungsmaschine
- Fig. 2a, 2b: jeweils in einer dreidimensionalen Ansicht (Fig. 2a Draufsicht, Fig. 2b Unteransicht) die Tragplatte der erfindungsgemäßen Bearbeitungsmaschine
- Fig. 3, 4, 6, 7: jeweils in einer Ansicht verschiedener Ausgestaltungen des Spannelementes nach der Erfindung
- Fig. 5: ein in der Bearbeitungsmaschine verwendbares Drehfutter in der Seitenansicht
- Fig. 8: eine Seitenansicht einer weiteren Ausführungsform der erfindungsgemäßen Bearbeitungsmaschine mit Nullpunktspannung,
- Fig. 9: Detail aus Fig. 8.
- Fig. 10: eine Seitenansicht einer weiteren Ausführungsform der erfindungsgemäßen Bearbeitungsmaschine.
- Fig. 11, 12, 13: jeweils in einer Seitenansicht die Werkzeugspindel einer erfindungsgemäßen Bearbeitungsmaschine.
- Fig. 14: in einer Draufsicht die Stirnseite der Werkzeugspindel der erfindungsgemäßen Bearbeitunsmaschine nach Fig. 12.

In den Figuren sind gleiche oder einander entsprechende Elemente jeweils mit den gleichen Bezugszeichen bezeichnet und werden daher, sofern nicht zweckmäßig, nicht erneut beschrieben.

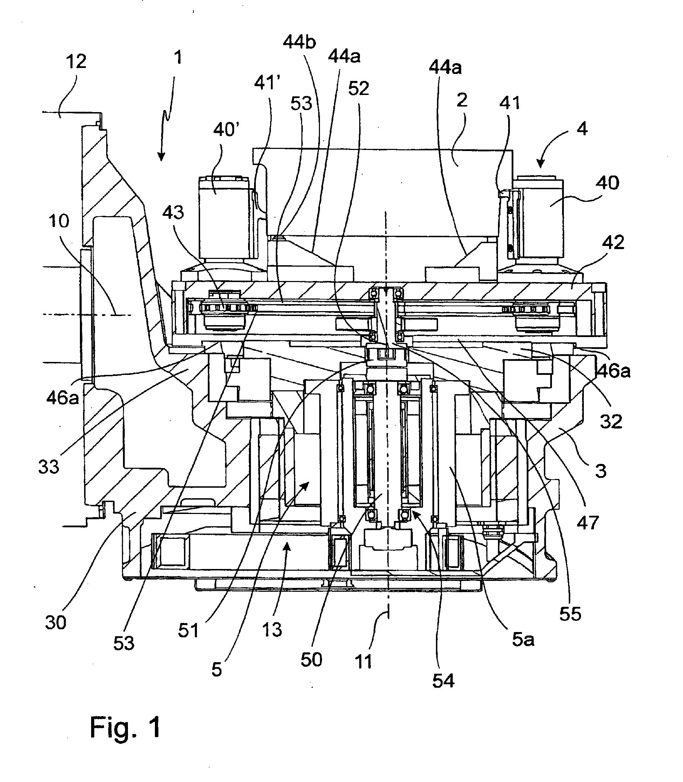

In Fig. 1 ist die Erfindung schematisch gezeigt. Die Bearbeitungsmaschine 1 umfasst zum Einen einen Werkstücktisch 3, der das Werkstück 2 hält. In Fig. 1 nicht gezeigt ist das Bearbeitungswerkzeug, das zum Beispiel als Bohrer oder Fräser ausgebildet ist, von einer Werkzeugspindel angetrieben ist und in geeigneter Weise relativ zu dem Werkstück 2 bewegbar ist. Die Bearbeitungsmaschine 1 nach der Erfindung besitzt eine Mehrzahl von Achsen. Um eine möglichst flexible Bearbeitung zu erreichen ist vorgesehen, dass das Werkstück 2 relativ zu dem Bearbeitungswerkzeug entlang der drei Raumachsen positionierbar ist. Neben diesen Longitudinalachsen sind aber auch Rotationsachsen vorgesehen. Eine erste Rotationsachse ist mit dem Bezugszeichen 10 gekennzeichnet und wird als B-Achse bezeichnet. Sie ermöglicht eine Drehung des Werkstücktisches 3 um eine horizontal orientierte Drehachse 10. Dabei ist die Anordnung so gewählt, dass der Werkstücktisch 3 eine Konsole 30 aufweist, die zum Beispiel einseitig an einem Schlitten oder einer Säule 12 angeordnet ist. Bei einer schlittenartigen Ausgestaltung ist dann zum Beispiel eine Bewegung in vertikaler Richtung (rechtwinklig zur Achse 10) möglich.

Des Weiteren ist vorgesehen, dass das Werkstück 2 um eine in Fig. 1 vertikal orientierte weitere Drehachse 11 drehbar ist. Da die Ausrichtung dieser Drehachse abhängig ist von der Stellung der Konsole 30 um die Drehachse 10, ist natürlich die zweite Drehachse 11 (zum Beispiel als A-Achse bezeichnet) nicht festgelegt, sie steht allerdings rechtwinklig auf der ersten Achse 10.

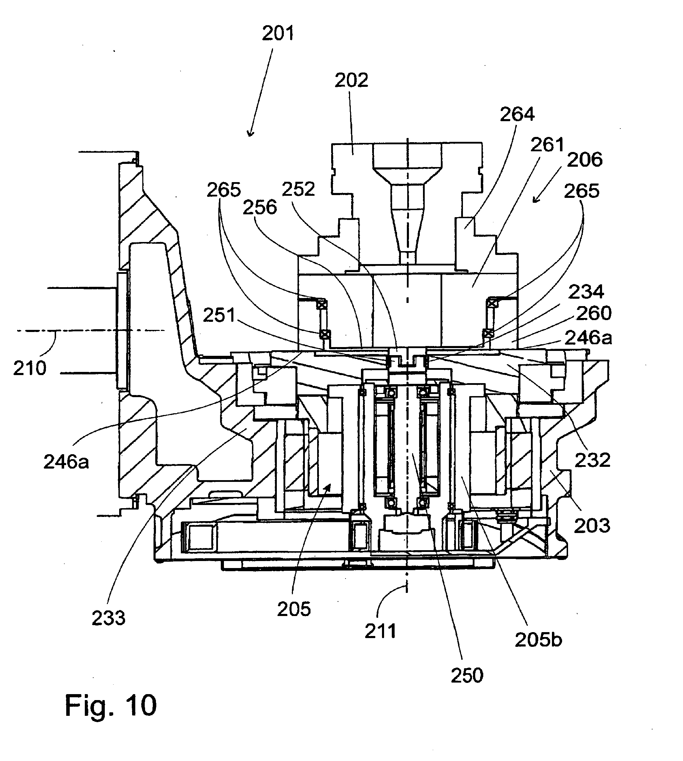

Für eine Drehung des werkstückes 2 um die zweite Achse 11 ist an der Bearbeitungsmaschine 1 ein bevorzugt elektrisch ausgeführter Drehantrieb 13 vorgesehen. Im Ausführungsbeispiel der Fig. 1 und 10 wird die Rotationsmöglichkeit des Werkstücktisches 3 um verschiedene Raumachsen 10, 11 gezeigt. Selbstverständlich kann die erfindungsgemäße Ausführung einer Bearbeitungsmaschine auch realisiert werden, wenn eine solche Rotationsmöglichkeit nicht oder nur teilweise vorgesehen ist, das heißt, der Werkstücktisch 3 zum Beispiel nur entlang der Längsachsen beweglich oder komplett festgehalten also ortsfest ausgebildet ist. Die Erfindung ist sofern frei bei der Aufteilung der verschiedenen Bewegungs- oder Rotationsachsen auf die Positionierung des Werkstückes 2 oder des Bearbeitungswerkzeuges.

Es wird betont, dass die erfindungsgemäße Ausgestaltung sowohl bei Bearbeitungsmaschinen 1 realisierbar ist, die, wie gezeigt, mit einer Rotationsmöglichkeit des Werkstücktisches 3 um verschiedene Raumachsen 10, 11 ausgestattet ist, wie auch bei Bearbeitungsmaschienen, die eine solche Rotationsmöglichkeit nicht bieten, also zum Beispiel nur entlang der Längsachsen beweglich ist oder komplett festgehalten also ortsfest ausgebildet sind.

Die Erfindung ist insofern frei bei der Aufteilung der verschiedenen Bewegungs- oder Rotationsachsen auf die Positionierung des Werkstückes oder des Bearbeitungswerkzeuges.

Anstelle von der hier gezeigten konsolenartigen (30) Ausgestaltung des Werkstücktisches 3, ist natürlich auch eine portalartige Ausgestaltung möglich.

Das zu bearbeitende Werkstück 2 ist mit Hilfe der Spannvorrichtung 4 auf einer zum Werkstücktisch 3 zählenden Tragplatte 42 aufgespannt.

Die in Fig. 1 gezeigte Ausgestaltung der Erfindung ist so gewählt, dass die Spannvorrichtung 4 mehrere Spannelemente 40, 40' umfasst. Die einzelnenen Spannelemente 40, 40' sind im Wesentlichen gleichartig ausgebildet und besitzen eine seitlich vorstehende Spannpratze 41, 41', die längsbeweglich an dem Spannelement vorgesehen ist. Die Spannpratze 41, 41' greift an entsprechenden Positionen an den Werkstück ein und presst dieses auf die Tragplatte 42. Neben dieser unmittelbaren Verbindung ist es natürlich auch möglich, dass die Spannpratze mittelbar das Werkstück hält, zum Beispiel, wenn das Werkstück 2 auf einem Werkstückträger oder Palette oder Ähnlichem befestigt ist.

Die Spannpratze 41 ist rechtwinklig zur Ebene der Tragplatte 42 längsbeweglich. Diese Längsbewegung wird durch einen Spindelantrieb in dem Spannelement 40 realisiert, bei welchen die Spannpratze 41 Teil einer Spindelmutter ist, die auf einer angetriebenen Spindel läuft. Koaxial auf dieser Spindel ist ein Zahnrad 43 vorgesehen, welches über eine Kette oder ein anderes Kraftübertragungsmittel 53 mit einem Zentralantrieb 55 verbunden ist. Die Ausgestaltung ist dabei so gewählt, dass alle Spannelemente in gleicher Weise von dem Zentralantrieb angetrieben werden und eine endlos umlaufende Kette 53 als Kraftübertragungsmittel vorgesehen ist.

Als Zentralantrieb ist erfindungsgemäß ein Elektromotor 5 vorgesehen, der mit einem entsprechenden Antriebsritzel und/oder einem Getriebe ausgestattet ist und so die Kette oder ein sonstiges Kraftübertragungsmittel 53 antreibt.

Dabei ist es günstig, dass durch eine Umsteuerung der Rotationsrichtung des Elektromotors die Öffnungs- oder Schließbewegung der Pratze 41, 41' beeinflussbar ist.

Der Aufbau des Elektromotors 5 ist wie üblich, eine aus dem Gehäuse des Elektromotors 5 vorstehende Motorwelle wirkt als Rotor und trägt entsprechende Drehmoment-, Drehimpuls- oder Kraftübertragungselemente, wie zum Beispiel ein Ritzel, Antriebsritzel, Getriebe oder Ähnliches.

In dem hier gezeigten Ausführungsbeispiel ist ein Elektromotor 5 als Zentralantrieb vorgesehen, der auf mehrere Spannelemente 40, 40' wirkt. In einem alternativen erfindungsgemäßen Konzept ist aber auch vorgesehen, dass jedes einzelne Spannelement einen Direktantrieb aufweist und so jedem einzelnen Spannelement ein eigener Elektromotor zugeordnet ist.

Zentraler Bestandteil der Erfindung ist dabei der Einsatz eines Elektromotores in nächster Nähe zum Werkstück 2. Die vom Elektromotor 5 angetriebene Motorwelle 50 wirkt dabei möglichst direkt, zum Beispiel über die Motorwelle selber, über ein Getriebe, ein sonstiges Kraftübertragungsmittel oder über eine Hydraulikleitung auf das Spannelement und prägt entsprechende Spannkraft in diesem ein so, dass das Werkstück sicher gehalten ist.

Zwischen der Spindel in dem Spannelement 40 und dem Kettenantrieb ist eine Rutschkupplung vorgesehen, in welcher die Spannkraft des Spannelementes begrenzbar ist. Die Spannkraft wird dabei durch einen selbsthemmendes Getriebe, einen selbsthemmenden Motor oder eine sonstige Bremse aufrechterhalten.

Durch Überwachung der Stromaufnahme des Elektromotors ist dabei nun möglich, die einzelnen Spannzustände der Spannelemente 40 elegant und einzeln zu überwachen.

An den Pratzenantrieben mit Hilfe der Spindeln und den Ritzeln ist auch ein Freilauf vorgesehen, um das Wiederöffnen der Spannelemente zu erreichen.

Geschickter Weise ist zwischen dem Elektromotor 5 und den einzelnen Spannelementen 40, 40' der Spannvorrichtung 4 auch ein Getriebe vorgesehen, durch welches eine Übersetzung zur Drehmomenterhöhung möglich ist.

Ein wesentlicher Vorzug der Erfindung liegt auch darin, dass auf der Motorwelle 50 ein Adapteranschluss 51 vorgesehen ist und die gesamte Tragplatte 42 vom Werkstücktisch 3 in einfacher Weise abbaubar ist und so in den Adapteranschluss 51 zum Beispiel ein Drehfutter einsetzbar ist, in welchem dann ein anderes Werkstück 2 einspannbar ist.

Im Ausführungsbeispiel der Fig. 1 ist die erfindungsgemäße Bearbeitungsmaschine mit ruhendem Werkstück 2 gezeigt. Das zu bearbeitende Werkstück 2 ist hier mit Hilfe der Spannvorrichtung 4 auf einer Tragplatte 42 aufgespannt. Diese Tragplatte 42 ist Bestandteil der in der erfindungsgemäßen Bearbeitungsmaschine 1 austauschbaren beziehungsweise vom Werkstücktisch 3 abnehmbaren Spannvorrichtung 4. Auf der Tragplatte 42 weist die Spannvorrichtung 4 mehrere Spannelemente 40, 40' auf. Die einzelnen Spannelemente 40, 40' sind im Wesentlichen gleichartig ausgebildet und besitzen eine seitlich vorstehende Spannpratze 41, 41', die längsbeweglich an dem Spannelement 40, 40' vorgesehen ist. Die Spannpratze 41, 41' greift an definierten Positionen am Werkstück 2 ein und presst dieses während der Bearbeitung auf die Tragplatte 42. Neben dieser unmittelbaren Verbindung ist es natürlich auch möglich, dass die Spannpratze 41, 41' mittelbar das Werkstück 2 hält, zum Beispiel, wenn das Werkstück 2 auf einem Werkstückträger oder einer Palette oder ähnlichem befestigt ist. Unterhalb des Werkstückes 2 sind Lagerklötze 44a auf der Tragplatte 42 angeordnet, die einen Lagerpunkt 44b mit definierter Lagerposition für das Werkstück 2 zur Verfügung stellen. Die Lagerklötze 44a sind ebenfalls auf der Tragplatte 42 befestigt. Die Tragplatte 42 selbst stützt sich über die Abstützpunkte 46a auf den Werkzeugtischen 3 beziehungsweise dem Werkstückträger 33 ab.

Die Spannpratzen 41, 41' sind rechtwinklig zur Ebene der Tragplatte 42 längsbeweglich. Diese Längsbewegung wird beispielsweise durch einen Spindelantrieb in dem Spannelement 40, 40' realisiert, bei welchem die Spannpratzen 41, 41' Teile von Spindelmuttern sind, die auf einer angetriebenen Spindel laufen. Koaxial auf diesen Spindeln sind Zahnräder 43 vorgesehen, welche über ein Kraftübertragungsmittel 53 mit einem Zentralantrieb 55 verbunden sind. Das Kraftübertragungsmittel 53 kann beispielsweise in Form einer Kette oder dergleichen zur Verfügung gestellt werden. Die Ausgestaltung und Führung des Übertragungsmittels 53 ist dabei so gewählt, dass alle Spannelemente 40, 40' in gleicher Weise von dem Zentralantrieb 55 angetrieben werden. Der Zentralantrieb 55 wiederum steht über ein Motorwellenanschlussstück 52 mit einem die Antriebskraft zur Verfügung stellenden Antriebsmotor 5 in Verbindung, der bevorzugt als Elektromotor 5a oder Hydraulikmotor 5b ausgebildet ist. Dieser Antriebsmotor 5 treibt eine Antriebswelle 50 an, die über einen Adapteranschluss 51 mit dem Motorwellenanschlussstück 52 des Zentralantriebes 55 der Spannvorrichtung 4 verbunden ist. Der Antriebsmotor 5 dient im Ausführungsbeispiel der Fig. 1 als Antrieb für die Spannvorrichtung 4. Der mit dem Antriebsmotor 5 verbundene Zentralantrieb 55 weist dementsprechend ein Antriebsritzel und/oder ein Getriebe auf, das eine Kraftübertragung vom Antriebsmotor 5 auf die Kraftübertragungsmittel 53 bewirkt. Dabei ist es günstig, dass durch eine Umsteuerung der Rotationsrichtung des Antriebsmotors 5 die Öffnungs- und Schließbewegung der Spannpratzen 41, 41' beeinflussbar ist. Der Zentralantrieb 55 sowie die Kraftübertragungsmittel 53 und die Antriebsritzel und/oder das Getriebe 54 sind dabei in der Tragplatte 42 aufgenommen und als bedarfsweise vom Werkstücktisch 3 beziehungsweise dem Werkstückträger 33 entnehmbare Einheit ausgebildet. Durch Lösen des Zentralantriebes 55 von der Antriebswelle 50 des Antriebsmotors 5 kann die gesamte Spannvorrichtung 4, das heißt die den Zentralantrieb 55, die Kraftübertragungsmittel 53 und die entsprechenden Antriebsritzel beziehungsweise das Getriebe umfassende Tragplatte 42, die darauf angeordneten Spannelemente 40, 40' sowie die an diesem vorgesehenen Spannpratzen 41, 41' von der Bearbeitungsmaschine 1 beziehungsweise am Werkstück 3 entnommen werden. Nach Entnahme der Spannvorrichtung 4 verbleibt lediglich der Werkstückträger 33 mit darin vorgesehenem Rundtisch 32 am Werkstücktisch 3. Im Rundtisch 32 zentral angeordnet ist der Adapteranschluss 51, der wahlweise für die Anordnung der Spannvorrichtung 4 beziehungsweise eines Dreh- oder Backenfutters 6 zur Verfügung steht. Der Adapteranschluss 51 befindet sich dabei zwischen den Abstützpunkten 46a beziehungsweise in der von diesen begrenzten Fläche 47. Ein Vorteil der Bearbeitungsmaschine 1 ist, dass als zentraler Bestandteil der Erfindung der Einsatz eines Motors, bevorzugt eines Elektro- 5a oder Hydraulikmotors 5b, in nächster Nähe zum Werkstück 2 vorgesehen ist. Die vom Motor 5 angetriebene Antriebswelle 50 wirkt dabei möglichst direkt zum Beispiel über die Antriebswelle 50 selbst, über ein Getriebe, ein sonstiges Kraftübertragungsmittel 53 oder über eine Hydraulikleitung auf die bedarfsweise an der Bearbeitungsmaschine ansetzbare Spannvorrichtung ein und prägt eine entsprechende Spannkraft in die Spannelemente 40, 40' der Spannvorrichtung 4 ein, sodass das Werkstück 2 sicher gehaltert werden kann. Alternativ kann zur Kraftübertragung vom Antrieb 5 auf die Antriebswelle 50 ein zusätzliches Getriebe 54 vorgesehen werden.

In der Spannvorrichtung ist zwischen der Spindel in dem Spannelement 40, 40' (nicht dargestellt) und dem Kettenantrieb, das heißt dem Zentralantrieb 55 und den damit verbundenen Kraftübertragungsmitteln 53 beziehungsweise den den Spannelementen 40, 40' zugeordneten Zahnrädern oder sonstigen Elementen, eine Rutschkupplung vorgesehen, in welcher die Spannkraft des Spannelementes 40, 40' begrenzbar ist. Die Spannkraft wird dabei durch ein selbsthemmendes Getriebe, einen selbsthemmenden Motor oder eine sonstige Bremse aufrechterhalten.

Durch Überwachung der Kraftaufnahme des Antriebsmotors ist es dabei möglich, die einzelnen Spannzustände der Spannelemente 40, 40' zu überwachen und entsprechend zu beeinflussen. An den Pratzenantrieben sowie den Getrieberitzeln ist ein Freilauf vorgesehen, um das Wiederöffnen der Spannelemente 40, 40' zu erreichen.

Die gesamte Spannvorrichtung 4 kann vom Werkstücktisch entnommen werden, sodass am Werkstücktisch 3 nur noch der Rundtisch 32 des Werkstückträgers 33 sowie die Antriebswelle 50 und der dieser zugeordnete Antriebsmotor 5 verbleibt und für die Anordnung weiterer alternativer Elemente der erfindungsgemäßen Bearbeitungsmaschine 1 zur Verfügung steht. Über den Adapteranschluss 51 kann ein Dreh- oder Backenfutter 6 angeordnet werden, in welchem dann ein Werkstück 2 einspannbar ist. Die erfindungsgemäße Bearbeitungsmaschine 1 ermöglicht somit ein kurzfristiges Umrüsten von Fräsbearbeitung auf Drehbearbeitung und umgekehrt.

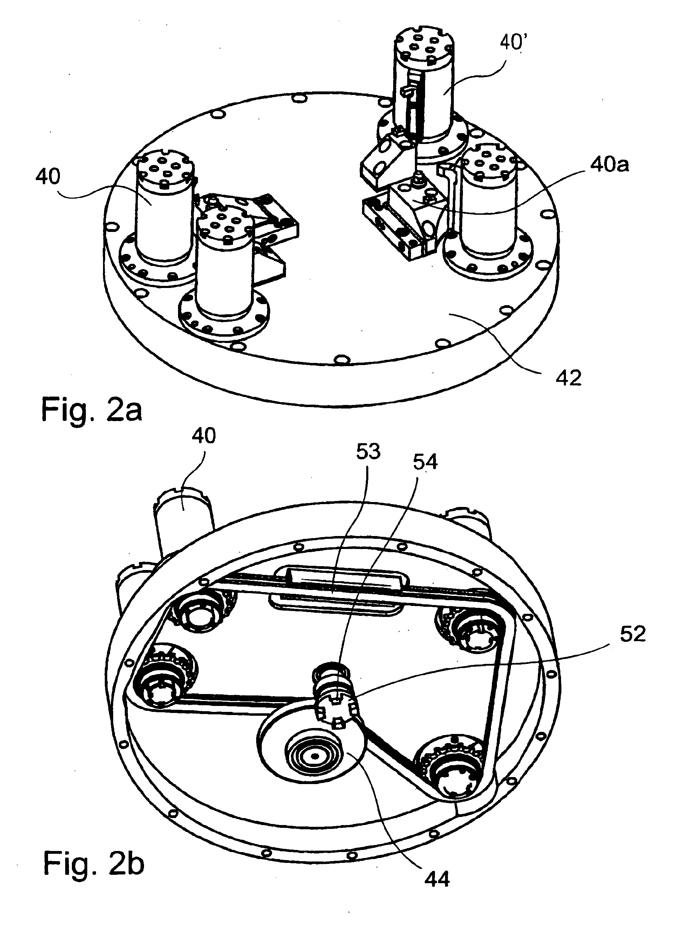

In Fig. 2a, 2b ist die Tragplatte 42 in einer Draufsicht (Fig. 2a) und in einer Unteransicht (Fig. 2b) gezeigt. Auf der Unterseite der Tragplatte 42 ist das Motorwellenanschlussstück 52 zu sehen. Es besitzt mehrere seitliche Mitnehmer 54, die in die entsprechende Ausnehmung des Adapteranschlusses 51 der Motorwelle 50 (vgl. Fig. 1) eingreift und so das Drehmoment übertragen.

Durch die Rotation der Motorwelle 50 wird auch das drehbar gelagerte Motorwellenanschlussstück 52 in Rotation versetzt. Das Motorwellenanschlussstück 52 treibt dann direkt oder gegebenenfalls über ein Getriebe ein Kraftübertragungsmittel 53, hier zum Beispiel eine Kette oder Rollenkette, an. Diese Kette 53 ist über die Zahnräder der einzelnen Spannelemente 40 geführt und treibt diese gleichsinnig an. Zusätzlich treibt das Motorwellenanschlussstück 52 auch ein Antriebsrad 44 eines weiteren, etwas anders ausgestalteten Spannelementes 40a an. Es kann sich hierbei zum Beispiel um eine sogenannte Nullpunktspannvorrichtung handeln mit welchem eine exakte Positionierung des Werkstückes beziehungsweise des das Werkstück tragenden Werkstückträgers/Palette erfolgt. Es ist erwähnt worden, dass als Kraftübertragungsmittel 53 nicht nur mechanisch wirkende Elemente vorgesehen sind, sondern auch wiederum eine hydraulisch betriebene Spannvorrichtung vorgesehen ist. Dies widerspricht in keinster Weise dem erfindungsgemäßen Gedanken! Wie deutlich in Fig. 2b zu sehen, befindet sich das Spannelement 40a, welches hydraulisch betrieben wird, auf der gleichen Rotationsebene wie das Werkstück, das heißt, diese beiden Elemente werden gegeneinander nicht mehr verdreht, eine aufwendig abzudichtende Drehverteilung ist hier nicht notwendig, die hydraulische Verrohrung ist denkbar einfach. Auf der anderen Seite ist die Ausgestaltung einer Nullpunktspannvorrichtung als Bauelement standartisiert und ist mit einer Hydraulikbeaufschlagung ausgestattet. Es ist ein Vorzug der Erfindung, dass mit Hilfe des erfindungsgemäß vorgeschlagenen Elektromotors 5 auch eine (kleine) Hydraulikpumpe hiervon angetrieben werden kann, die dann für das hydraulisch betriebene Spannelement 40a als Nullpunktspannvorrichtung vorgesehen und eingesetzt ist. Das Antriebsrad 44 wirkt dabei in geeigneter Weise auf diese kleine Hydraulikpumpe.

Zu erwähnen ist noch, dass durch eine geschickte Führung der Pratze in dem Spannelement, zum Beispiel in einer Kullissenführung, die Pratze auch eine Drehbewegung ausführen kann. Die erfindungsgemäßen Bearbeitungsmaschine wird oftmals automatisch be- und entladen und die Pratze ist dann gleichzeitig aus dem Bewegungsraum des ein- und auszuliefernden Werkstückes zu entfernen. Durch eine Überwachung der Drehbewegungen des Elektromotors ist daher auch die Position der einzelnen Spannpratzen 41 überwachbar und aufgrund der Zwangsführung ist eine solche Anordnung auch betriebssicher.

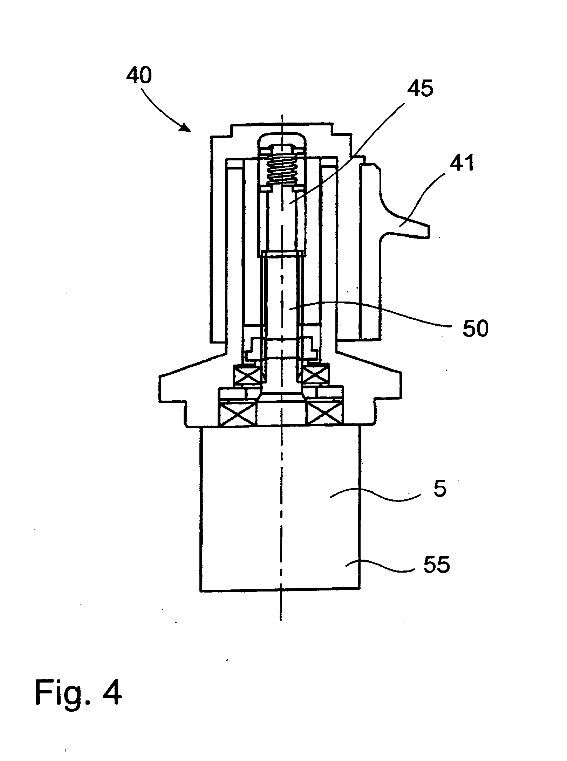

Fig. 4 zeigt einen beispielhaften Aufbau eines Spannelementes 40, bei welchem ein Elektromotor 5 als Direktantrieb 55 angeschlossen ist. Dabei treibt die Motorwelle gleich die Spindel 45 des Spannelementes an, die Pratze 41 sitzt über einer Spindelmutter auf der Spindel 45.

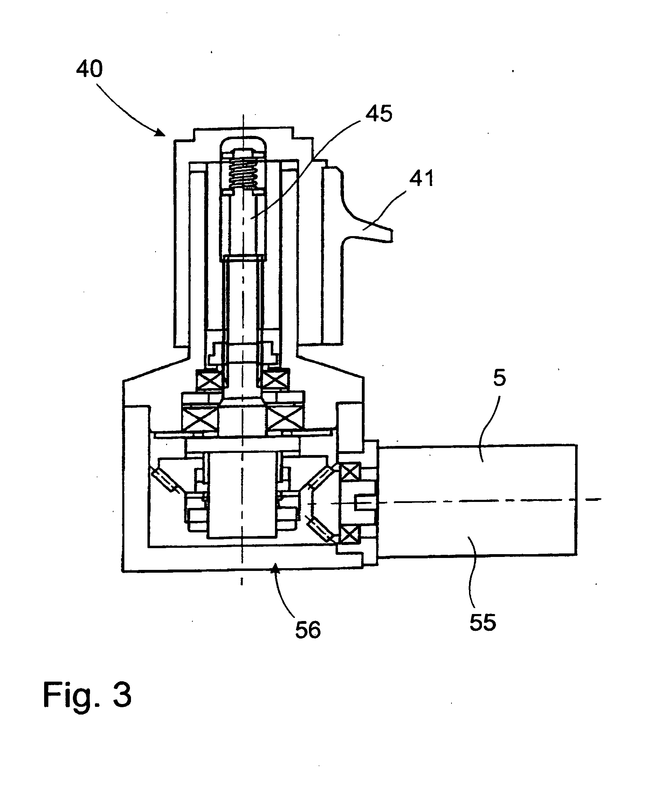

In Fig. 3 ist eine alternative Variante für das Spannelement 40 gezeigt. Wiederum ist in dem Spannelement ein eigener als Direktantrieb 55 wirkender Elektromotor 5 zugeordnet, der über eine Winkelgetriebe 56 auf die Spindel 45 wirkt.

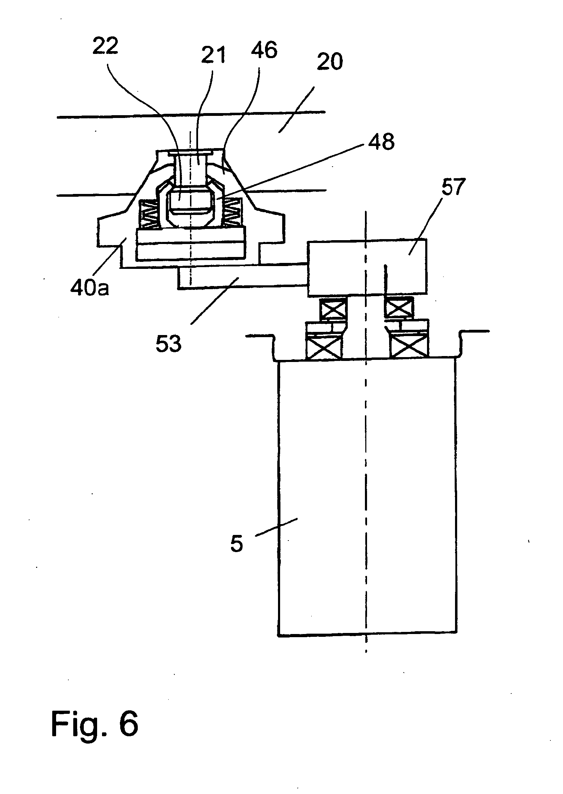

In Fig. 6 ist eine weitere alternative Variante des Spannelementes 40a gezeigt. Das hier nicht gezeigte Werkstück 2 ist auf einem Werkstückträger 20 oder Palette 20 angeordnet und hierauf exakt fixiert. Der Werstückträger 20 besitzt auf seiner Unterseite zumindest einen Zapfen 21, der in das Spannelement 40a einsteht.

Das Spannelement 40a besitzt Spannzangen 46, die den Zapfenkopf 22 hintergreifen. Die Bedienung der Spannzangen 46 erfolgt nun bevorzugt hydraulisch. Das Kraftübertragungsmittel 53 ist hierbei das unter entsprechendem Arbeitsdruck stehende Hydraulikmedium, der erfindungsgemäße vorgeschlagene Elektromotor 5 wirkt daher auf eine Hydraulikpumpe 57, die ein entsprechendes Druckniveau erzeugt.

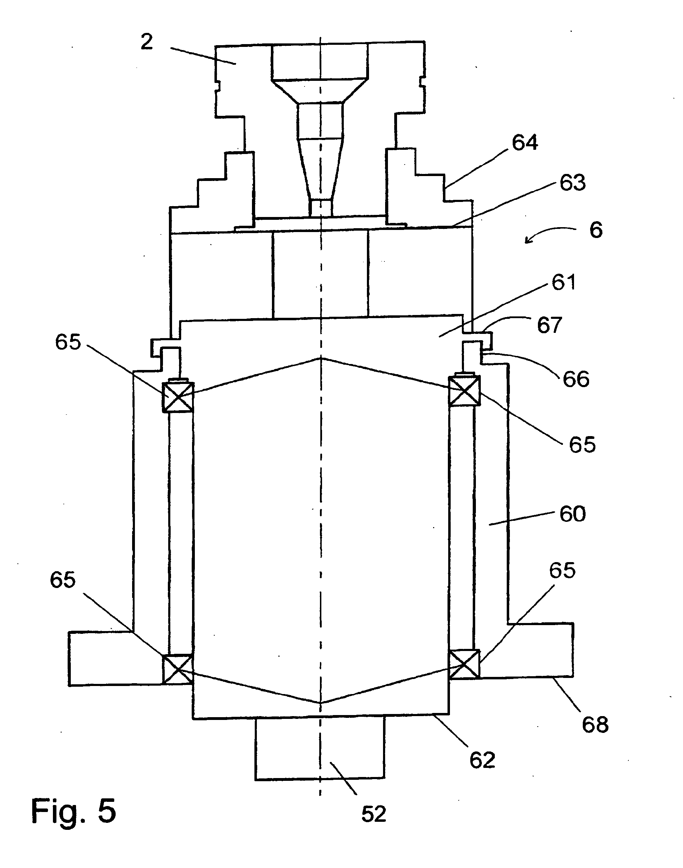

In Fig. 5 ist in einer Detailansicht das Dreh- oder Backenfutter 6 gezeigt. Wie beschrieben, erlaubt der erfindungsgemäße Vorschlag eine Demontage der Tragplatte 42 von dem Werkstücktisch 3. An dem dem Motor entferntliegenden Ende der Motorwelle 50 befindet sich der Adapteranschluss 51. In diesen steht das Motorwellenanschlussstück 52 des Dreh- oder Backenfutters 6 in gleicher Weise ein.

Das Dreh- oder Backenfutter 6 ist im Übrigen wie üblich ausgebildet und erlaubt ein radiales Ergreifen des Werkstückes 2. Gegebenenfalls sind zusätzliche Verbindungs- oder Befestigungsmittel vorgesehen, um das Backenfutter 6 auf der Motorwelle 50 oder dem Werkstücktisch 3 zu befestigen.

Das Dreh- oder Backenfutter 6 der Fig. 5 umfasst im Ausführungsbeispiel der Fig. 5 einen Futterkörper 260, der fest mit dem Rundtisch 232 (vgl. Fig. 10) verbindbar ist und als Aufnahme für die drehbare Spindel 261 des Dreh- oder Backenfutters 206 dient. Die Spindel 261 ist im Ausführungsbeispiel der Fig. 10 über zwei Lager 265 im Inneren des Futterkörpers gelagert und weist an ihrer im Montagezustand dem Werkstücktisch 203 beziehungsweise dem Rundtisch 232 zugewandten unteren Ende ein Motorwellenanschlussstück 252 auf. Dieses Motorwellenanschlussstück 252 wird bei Montage des Futters mit dem Adapteranschluss 251 der Antriebswelle 250 in Eingriff gebracht, sodass ein unmittelbarer Antrieb der Spindel 261 durchgeführt werden kann. An ihrem dem Motorwellenanschlussstück 252 gegenüberliegenden oberen Ende weist die Spindel 261 Backen 264 auf, die zum Spannen eines Werkstückes 202 in oder an der Spindel 261 dienen. Das hier dargestellte Dreh- oder Backenfutter 206 kann als Zwei-, Drei- oder Mehrbackenfutter ausgebildet werden und stellt somit eine Vielzahl von Spannmöglichkeiten für verschiedenste Werkstücke 202 zur Verfügung. Im Futterkörper 60 angeordnet befinden sich zwei Lager 65, die in Fig. 5 stark schematisiert dargestellt sind. Es kann sich hierbei um Kugel-, Gleit- oder Wälzlager handeln. Der den Futterkörper 60 überragende Teil der Spindel 61 weist zudem den oberen Rand 66 des Futterkörpers 60 übergreifende Vorsprünge 67 auf, über die die Zentrierung der Spindel 61 im Futterkörper 60 verbessert wird. Hier wird somit die Möglichkeit zur hochgenauen Bearbeitung der gehalterten Werkstücke 2 möglich. Der Futterkörper 60 ist über entsprechende Haltemittel (in Fig. 5 nicht dargestellt) mit dem Rundtisch 32 verbindbar. Die Haltemittel sind dabei so ausgeführt, dass auch bei hohen Drehzahlen und damit hohen auf das Dreh- oder Backenfutter 6 einwirkenden Kräften ein dauerhafter und positionstreuer Anschluss des Dreh- oder Backenfutters 6 am Rundtisch 32 gewährleistet ist. Die Auflagerflächen 68 zwischen Futterkörper 60 und Rundtisch 32 sind dabei ausreichend groß gewählt, um diesen Sitz zu garantieren. Der Rundtisch 32 kann bei einer einfacheren Ausführung des Dreh- oder Backenfutters 6, das nur mit der Antriebswelle 50 verbunden ist, als Gleitfläche 256 für das rotierende Futter dienen, dass sich ohne weitere Befestigung am Rundtisch abstützt.

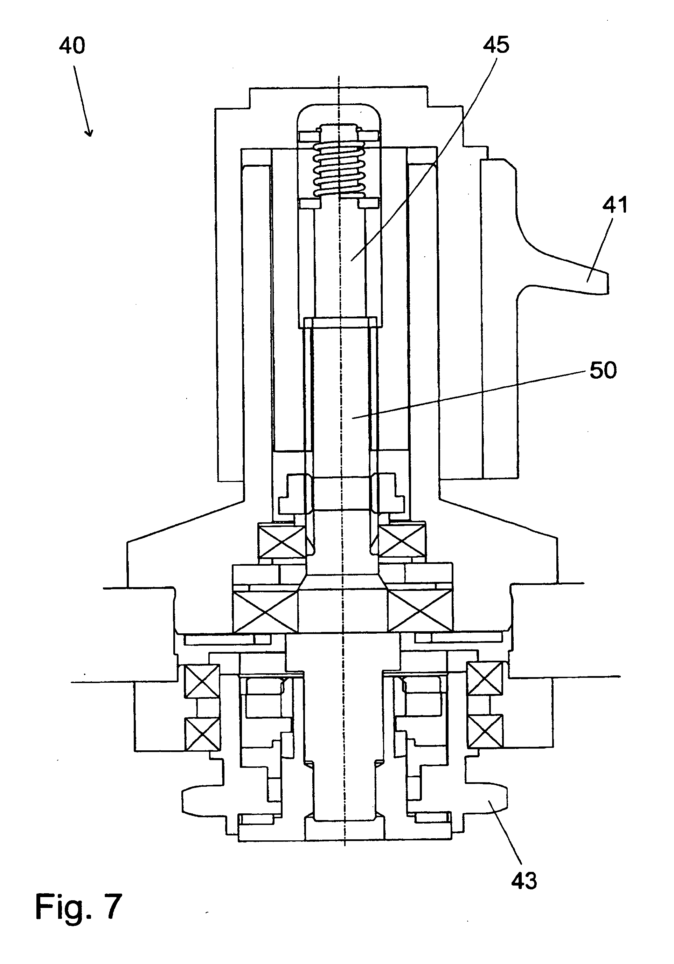

Fig. 7 zeigt eine weitere Ausführungsform des Spannelmentes nach der Erfindung. Im Unterschied zu den bereits vorgestellten Varianten befindet sich hier unterhalb des Spannelementes 40 ein Zahnrad 43, welches als Kettenritzel ausgebildet ist, an dem beispielsweise eine Kette als Kraftübertragungsmittel 53 angreift. Alle anderen Bezugszeichen entsprechen den bereits vorgestellten Bezugszeichen, so dass auf eine erneute Vorstellung verzichtet wird.

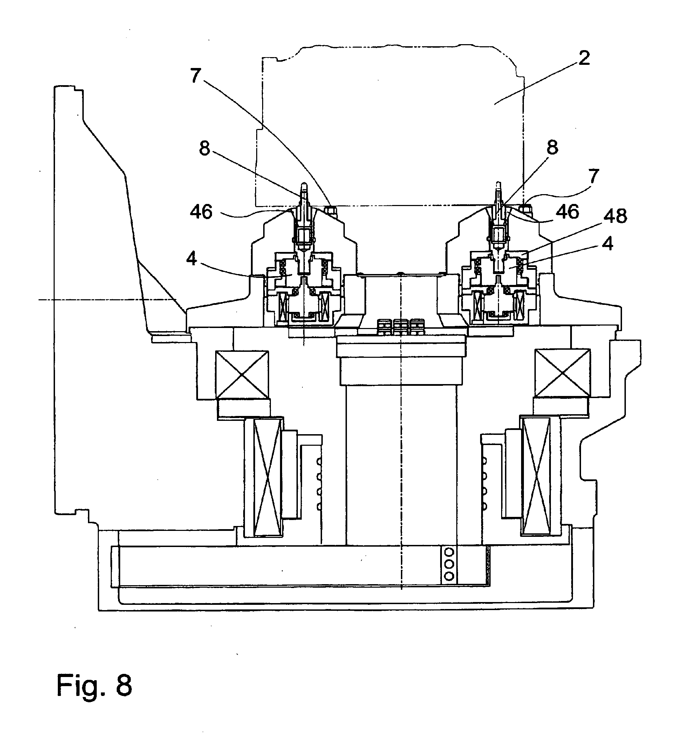

Die Fig. 8 zeigt in Seitenansicht eine weitere Ausführungsform einer erfindungsgemäßen Bearbeitungsmaschine mit Nullpunktspannung. Dabei ist lediglich ein Teil der Bearbeitungsmaschine dargestellt, der sichtbar macht, wie hier die Spannmittel im Zusammenwirken mit einer Nullpunktspannung eingesetzt werden. Die Null-Punkt-Spanneinrichtung dient, wie bereits erwähnt, zu exakten Positionierung beziehungsweise Ausrichtung des Werkstückes 2 an beziehungsweise auf der Bearbeitungsfläche. In dem vorgestellten Fall der Fig. 8 befinden sich an den Spannelementen Referenzflächen 7. Diese Referenzflächen 7 dienen der Erleichterung der exakten Positionierung des Werkstückes beziehungsweise einer werkstücktragenden Palette 2a. Aufgrund dieser Referenzflächen kann festgestellt werden, ob das Werkstück 2 exakt positioniert ist oder nicht.

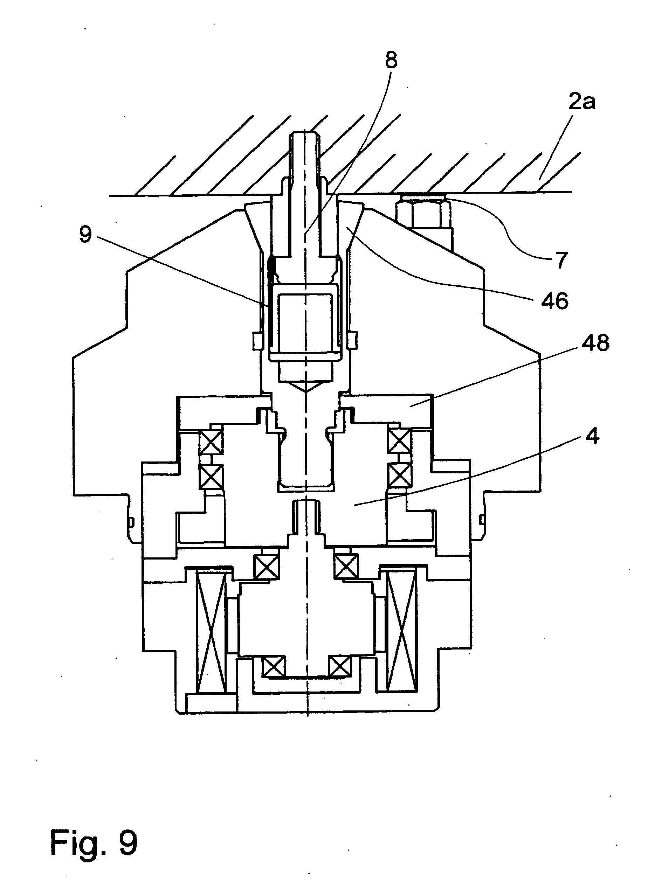

Das Werkstück 2 hat auf der der Spannvorrichtung zugewandten Seite Spannnippel 8. Diese Spannnippel 8 werden von Spannzangen 46 umfasst. In den Spannzangen 46 sind ebenfalls, wie weiter vorn bereits beschrieben, Spannklammern 48 angeordnet, die der weiteren Verbesserung der Spannung des Spannnippels 8 dienen. Durch diese Ausgestaltung gelingt es, den Spannvorgang, äußerst exakt zu gestalten, indem hier die Vorzüge der Nullpunktspannung mit den Vorzügen der elektromechanischen Spannung kombiniert werden. Anstelle einer Anordnung am Werkstück 2 kann der Spannnippel 8 auch an einer das Werkstück tragenden Palette 2a angeordnet sein. Diese Palette 2a ist schematisch in Fig. 9 dargestellt.

In Fig. 9 ist dabei ein Detail aus der Fig. 8 dargestellt, anhand dessen erkennbar ist, dass an dem Spannnippel 8 ein Datenträger 9 vorgesehen ist. Anstelle des Werkstückes 2 ist hier eine das Werkstück 2 tragende Palette 2a schematisch gezeigt. Der Datenträger 9 kann entweder als Transponder, als Barcode oder als anderes Informationsübertragungsmittel ausgestaltet sein. Dieser Datenträger 9 enthält entweder Werkstückinformationen über das zu bearbeitende Werkstück 2 sowie günstigenfalls auch Werkstückbearbeitungsinformationen, sodass nach dem Spannen die Steuerung sofort erkennt, welche Bearbeitung durchgeführt werden soll und die entsprechenden Steuervorgänge einleitet.

Fig. 10 zeigt eine weitere bevorzugte Ausführungsform der erfindungsgemäßen Bearbeitungsmaschine 1. Diese umfasst die bereits im Zusammenhang mit Fig. 1 beschriebenen Bestandteile und Funktionalitäten. Anstelle der dort gezeigten Spannvorrichtung 4 weist die in Fig. 10 dargestellte Bearbeitungsmaschine 201 ein auf dem Werkstücktisch 203 beziehungsweise dem Werkstückträger 233 angeordnetes in Fig. 5 gezeigtes Dreh- oder Backenfutter 6, 206 auf. Dieses stützt sich an dem im Werkstückträger 233 vorgesehenen Rundtisch 232 über Abstützpunkte 246a ab. Das Dreh- oder Backenfutter 206 weist einen Motorwellenanschlussstück 252 auf, der in eine Ausnehmung 234 im Rundtisch 232 eingeführt und mit einem Adapteranschluss 251 der Antriebswelle 250 verbunden ist. Hierüber erfolgt dann eine Kraftübertragung von dem ebenfalls im Werkstücktisch 203 aufgenommenen Antriebsmotor 205. Neben der Verwendung eines Elektromotors 205a als Antriebsmotor 205 besteht selbstverständlich auch die Möglichkeit hier eine Hydraulikmotor 205b als Antrieb 205 für die Antriebswelle 250 beziehungsweise das daran angeordnete Drehoder Backenfutter 206 vorzusehen. Das Dreh- oder Backenfutter 206 weist einen Futterkörper 260 auf, der fest mit dem Rundtisch 232 verbunden, bevorzugt in diesen eingeschraubt oder in sonstiger geeigneter Art und Weise mit diesem verspannt ist. Im Futterkörper 260 vorgesehen sind Lager 265, über die die Spindel 261 des Dreh- oder Backenfutters 206 drehbar im Futterkörper 260 gelagert ist. Die Lager 265 sind im Ausführungsbeispiel der Fig. 10 schematisch dargestellt und können als Kugel-, Gleit- oder Wälzlager oder in sonstiger geeigneter Art und Weise ausgebildet sein. In der Spindel 261 angeordnet befinden sich Backen 264 zum Spannen des Werkstückes 202. Auch bezüglich der Backen 264 besteht hier die Möglichkeit verschiedenste Backenformen sowie unterschiedliche Backenzahlen an der Spindel 261 vorzusehen.

Wie zuvor im Zusammenhang mit der Fig. 1 beschrieben, erlaubt die erfindungsgemäße Bearbeitungsmaschine 201 eine Demontage der Tragplatte 242 mit daran beziehungsweise darin angeordneter Spannvorrichtung 4 von dem Werkstücktisch 203. An dem dem Antriebsmotor 205 entfernt liegenden Ende der Antriebswelle 250 befindet sich nach Entnahme der Tragplatte 242 der freiliegende Adapteranschluss 251. In diesen steht das Motorwellenanschlussstück 252 des Dreh- oder Backenfutters 206 in gleicher Weise ein und kann über entsprechende Anschlussmittel mit der Antriebswelle 250 verbunden werden.

Das Dreh- oder Backenfutter 206 ist im Übrigen wie üblich ausgebildet und erlaubt ein radiales Ergreifen des Werkstückes 202. Wie in Fig. 10 dargestellt, liegt der Futterkörper 260 des Dreh- oder Backenfutters 206 auf dem Rundtisch 232 des Werkstücktisches 203 auf und wird in geeigneter Weise durch zusätzliche Verbindungs- oder Befestigungsmittel mit diesem verbunden. Daneben besteht jedoch auch die Möglichkeit, dass der Rundtisch 232 eine Gleitfläche 256 für den Futterkörper 260 zur Verfügung stellt und keine gesonderte, im Futterkörper 260 gelagerte Spindel 261 vorgesehen ist, sondern das Spannen des Werkstückes 202 direkt über die für den Futterkörper 260 geführten Backen 264 erfolgt.

Durch die Rotation der Antriebswelle 250 wird die drehbar gelagerte Spindel 261 in Rotation versetzt. Ein in der Bearbeitungsmaschine 201 ggf. vorgesehenes feststehendes Werkzeug, beispielsweise ein Drehmeißel oder Stemmer, kann dann gegen das Werkstück 202 angestellt werden und trägt dann Material ab. Durch eine entsprechend Lageveränderung des Werkzeuges kann dann eine entsprechende Bearbeitung des Werkstückes 202 durchgeführt werden. Beim Anstellen des Werkzeuges an das Werkstück 202 kann dessen Position auch durch eine entsprechende Ausrichtung des Werkstücktisches, über die Rotationsachsen 210, 211 erfolgen, sodass eine optimale Ausrichtung des Werkstückes 202 gegenüber dem Werkzeug gegeben ist. Hierdurch wird dann die optimale Bearbeitungsposition festgelegt und die Vielseitigkeit der erfindungsgemäßen Bearbeitungsmaschine 201 unterstrichen.

Die Erfindung wird unter Anderem im Zusammenhang mit einem allgemein als Elektromotor 205 bezeichneten Antrieb beschrieben. Dabei kann es sich auch um einen Synchron-, Asynchronoder Gleichstrommotor handeln. Der Synchronmotor kann als geberloser Synchronmotor und hierbei als Permanentmagnet erregter Synchronmotor ausgebildet sein und eine geberlose Rotorlage beziehungsweise Stillstandslageerkennung zulassen.

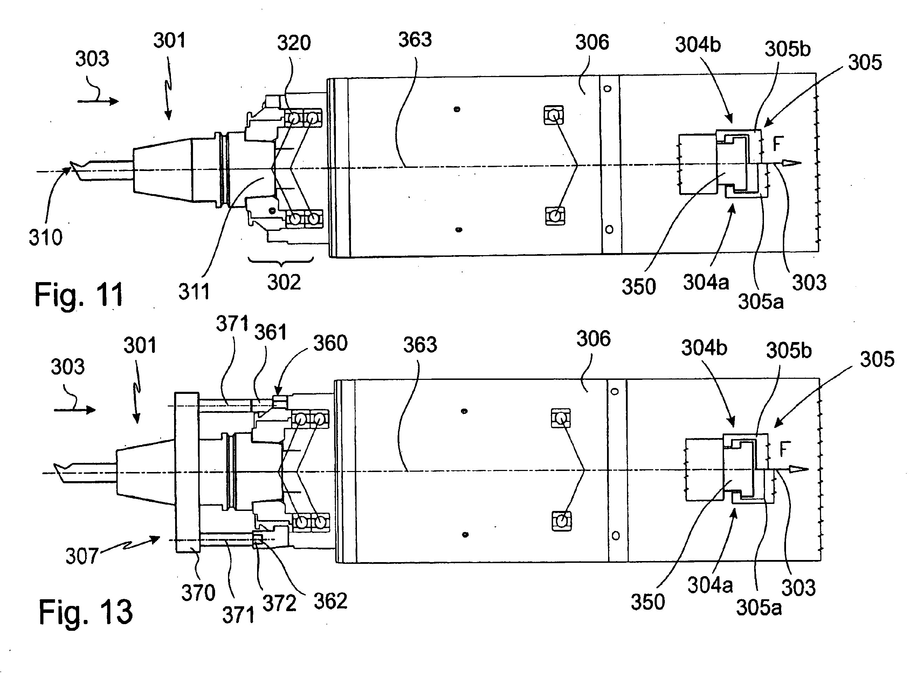

In Fig. 11, 12 und 13 sind im rechten Bereich in der jeweiligen Darstellung jeweils zwei verschiedene Stellungen angedeutet und mit den Buchstaben a und b gekennzeichnet. Eine Ausgestaltung der Bearbeitungsmaschine zielt darauf ab mit der hier dargestellten Bearbeitungsmaschine zwei Einsatzbereiche oder Einsatzmodi zu realisieren. Hierfür ist in der Werkzeugspindel 306 insbesondere auf der dem Bearbeitungswerkzeug 301 abgewandten Seite (in Fig. 11, 12, 13 auf der rechten Seite gezeigt) ein separater Antrieb vorgesehen, dessen Stellelement das Bezugszeichen 305 trägt, das synonym auch für den Antrieb verwendet wird. Die Fig. zeigt schematisch die beiden verschiedenen Stellungen des Stellelementes 305. In der oberen Hälfte (bezüglich der Mittelachse 363) ist die Normalstellung 304b gezeigt, in der unteren Hälfte ist die festgelegte Stellung 304a des Bearbeitungswerkzeuges 301 gezeigt. Der Antrieb 305 beziehungsweise dessen Stellelement 305 ist ebenfalls in zwei verschiedenen Stellungen 305a, 305b dargestellt. In der Stellung 304a hintergreift das im Schnitt c-förmig ausgebildete Stellelement 305a das an seinem Ende hammerkopfartig ausgebildetes Zugelement 350. Das Zugelement 350 ist mit nicht weiter dargestellten Einbauteilen verbunden, die letztlich ein Spannelement der Spannvorrichtung betätigen und so das Bearbeitungswerkzeug 301 in der Werkzeugaufnahme 302 festhalten. Die Rückzugsbewegung des Zugelementes 350 nach rechts ist mit der Wirkrichtung 303 gekennzeichnet. Die Wirkrichtung 303 bewirkt letztendlich auch ein Hineinziehen des Bearbeitungswerkzeuges 301 in den vorderen Bereich der Spindel 306 bzw. nach rechts. Der in der Abbildung schematisch dargestellte und mit dem Bezugszeichen 305 bezeichnete Antrieb kann verschiedene Ausführungsformen aufweisen. So kann der Antrieb 305 als Elektromotor oder Hydraulikmotor beziehungsweise -antrieb ausgeführt werden. Der Elektromotor selbst kann in Ausführungen als Synchron-, Asynchron- oder Gleichstrommotor verbaut werden, wobei die Verwendung eines geberlosen Synchron- oder Asynchronmotors entscheidende Vorteile hinsichtlich der Rotorlage- beziehungsweise Stillstandslageerkennung sowie bezüglich der Baumaße mit sich bringt.

In den in Fig. 11 gezeigten Ausführungsbeispielen wird durch die Bewegung des Antriebes 305 das Bearbeitungswerkzeug 301 so zurückgesetzt, dass dessen Werkzeugaufnahme 302 eine axiale Kraft auf das Drehlager beziehungsweise Wälzlager 320 ausübt. Der Werkzeugfuß 311 ist dabei in der Werkzeugaufnahme 302 eingesteckt, die Elemente der Spannvorrichtung sind nur schematisch dargestellt, die Werkzeugaufnahme 302 ist um die Rotations-/Längsachse 363 in dem Wälz- bzw. Drehlager 320 drehbar gelagert. Durch die von dem Antrieb 305 resultierenden Kraft F in Wirkrichtung 303 nach rechts versetzt, bildet sich eine entsprechende axiale Kraft in dem Drehlager 320 aus, die dazu führt, dass das Drehspiel kompensiert und so das Drehlager 320 beziehungsweise die Drehbewegung festgelegt wird. Ist aber die Drehbewegung des Drehlagers 320 aufgehoben, so vermag auch das Bearbeitungswerkzeug 301 sich nicht mehr zu drehen und ist somit auch festgelegt.

In dem in Fig. 11 gezeigten Beispiel wird das Bearbeitungswerkzeug 301 mittelbar über die Festlegung des Drehlagers 320 festgelegt.

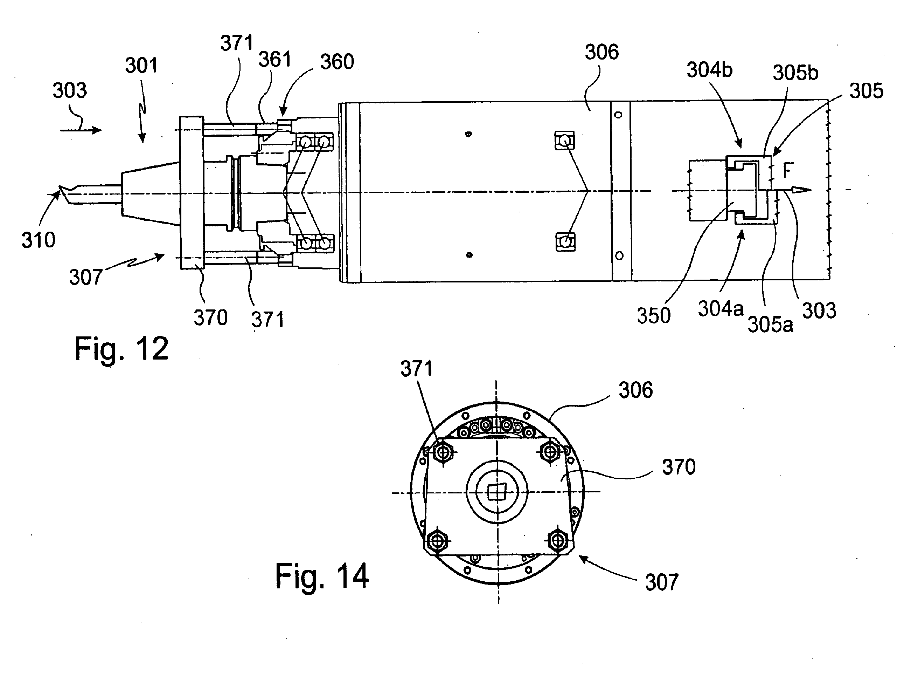

Fig. 12, 14 beziehungsweise Fig. 13 zeigen dagegen noch eine Variante bei welcher das Bearbeitungswerkzeug 301 selbst, also direkt beziehungsweise unmittelbar durch die Stellung des Zugelementes 350, bedingt durch den Antrieb 305 festgelegt ist.

Das Bearbeitungswerkzeug 301 trägt dabei eine Abstützvorrichtung 307, die gebildet ist durch eine auf dem Bearbeitunsgwerkzeug aufgeschobene Abstützplatte oder einen Abstützkragen 370. Diese Abstützplatte 370 weist eine größere Dimension als der Durchmesser des Werkzeugschaftes des Bearbeitungswerkzeuges 301 auf. Auf der der Werkzeugspitze 310 abgewandten Seite der Abstützplatte 370 weist die Abstützvorrichtung 307 mehrere Abstützelemente 371, z. B. Abstüztstifte 371 auf, die sich neben der Werkzeugaufnahme am Spindelkopf 360 auf einem Abstützbereich 361 oder Abstützring 361 in axialer Richtung abstützen.

Eine Festlegung des Bearbeitungswerkzeuges 301 in Umfangsrichtung (bezogen auf die Rotationsachse 363) erfolgt hier über die Reibung der Abstützelemente 371 auf dem Abstützbereich 361. Um eine bessere Drehmomentabstüzung zu erreichen, wird in Fig. 13 erfindungsgemäß eine Verbesserung vorgeschlagen. An dem unteren Abstützstift 371 ist eine Drehmomentabstützung 372 realisiert. Diese ist durch ein formschlüssiges Eintauchen des von der Abstützplatte 370 abgewandten Ende des Abstützstiftes 371 in eine Bohrung 362 des Abstützbereiches 361 gebildet.

## Patentansprüche

1. Bearbeitungsmaschine (1) für die Bearbeitung wenigstens eines Werkstückes (2, 202), wobei das Werkstück (2, 202) in der Bearbeitungsmaschine (1) auf oder an einem um mindestens eine Achse drehbaren Werkstücktisch (3, 203) mittelbar oder unmittelbar durch eine Spannvorrichtung (4) gehalten ist, für die Bearbeitung des Werkstückes (2, 202) ein nicht drehendes oder durch eine Werkzeugspindel rotatorisch angetriebenes Bearbeitungswerkzeug vorgesehen ist und das Bearbeitungswerkzeug in einer Werkzeugaufnahme mittelbar oder unmittelbar durch eine Werkzeugspannvorrichtung gehalten ist und die Werkzeugspannvorrichtung mindestens ein Werkzeugspannelement umfasst, welches mit dem Bearbeitungswerkzeug mittelbar oder unmittelbar zusammenwirkt, wobei der Werkstücktisch (3, 203) rotatorisch um zwei Drehachsen (10, 210, 11, 211) und längsbeweglich entlang von wenigstens einer, insbesondere drei Raumachsen (10, 210, 11, 211) bewegbar ausgebildet ist, **dadurch gekennzeichnet, dass** an dem Werkstücktisch (3, 203) wenigstens ein Elektromotor (5, 205, 5a, 205a) vorgesehen ist, dessen erzeugte Kraft (F), Drehmoment und/oder Drehimpuls zum mittelbaren oder unmittelbaren Festspannen des Werkstück (2, 202) wirkt und eine Spannkraftkontrolle über den von dem Elektromotor (5, 205, 5a, 205a) aufgenommenen Motorstrom vorgesehen ist.

2. Bearbeitungsmaschine (1) nach Anspruch 1, **dadurch gekennzeichnet, dass** die Kraft (F) und/oder das Drehmoment des Elektromotors (5, 205, 5a, 205a) über ein Getriebe (54), eine Kette, eine Ritzelanordnung, wenigstens ein Zahnrad (43), ein Winkelgetriebe (56) oder dergleichen auf das Werkstück (2, 202) und/oder die Spannvorrichtung (4) übertragbar ist und/oder der Elektromotor (5, 205, 5a, 205a) ortsfest in dem Werkstücktisch (3, 203) integriert ausgebildet ist.

3. Bearbeitungsmaschine (1) nach Anspruch 1 oder 2, **dadurch gekennzeichnet, dass** der Werkstücktisch (3, 203) eine Konsole (30) oder ein Portal aufweist, wobei die Konsole (30) oder das Portal an einem Schlitten oder einer Säule (12) der Bearbeitungsmaschine (1, 201) angeordnet ist und/oder der Werkstücktisch (3, 203) rotatorisch um eine erste horizontale Drehachse (10, 210) und eine zweite vertikale Drehachse (11, 211) bewegbar ausgebildet ist.

4. Bearbeitungsmaschine (1) nach einem der vorhergehenden Ansprüche, **dadurch gekennzeichnet, dass** der Elektromotor (5, 205, 5a, 205a) als auf mehrere Spannelemente (40, 40', 40a) der Spannvorrichtung (4) wirkender Zentralantrieb (55) angeordnet ist und/oder eine in das Spannelement (40, 40', 40a) und/oder das Werkstück (2, 202) einprägbare Spannkraft über eine Rutschkupplung begrenzbar und/oder durch ein selbsthemmendes Getriebe (54), einen selbsthemmenden Elektromotor (5, 205, 5a, 205a) oder eine Bremse aufrechterhaltbar ist.

5. Bearbeitungsmaschine (1) nach einem der vorhergehenden Ansprüche, **dadurch gekennzeichnet, dass** zwischen dem Elektromotor (5, 205, 5a, 205a) und der Spannvorrichtung (4) ein Getriebe (54) mit einer drehmomenterhöhenden Übersetzung vorgesehen ist und/oder die Spannvorrichtung (4) mindestens ein Spannelement (40, 40', 40a) umfasst, welches mit dem Werkstück (2, 202) mittelbar oder unmittelbar zusammenwirkt und der Elektromotor (5, 205, 5a, 205a), der in Wirkverbindung mit dem Spannelement (40, 40', 40a) steht, für die Erzeugung der Spannkraft vorgesehen ist.

6. Bearbeitungsmaschine (1) nach einem der vorhergehenden Ansprüche, **dadurch gekennzeichnet, dass** die Spannvorrichtung (4) mit einzelnen Spannelementen (40, 40', 40a), als Schraubstock und/oder Drei- oder Mehrbackenfutter ausgebildet ist und/oder die Spannelemente (40, 40', 40a), insbesondere seitlich vorstehende Spannpratzen (41, 41') aufweisen.

7. Bearbeitungsmaschinel (1) nach einem der vorhergehenden Ansprüche, **dadurch gekennzeichnet, dass** das Spannelement (40, 40', 40a) einen Spindeltrieb für eine Längsbewegung der Spannpratzen (41, 41') aufweist.

8. Bearbeitungsmaschine (1) nach einem der vorhergehenden Ansprüche, **dadurch gekennzeichnet, dass** ein das Werkstück (2, 202) tragender Werkstückträger (20) oder eine Palette (2a, 20) mit der Spannvorrichtung (4) haltbar ist und/oder das Bearbeitungswerkzeug (301) relativ zu dem auf dem Werkstücktisch (3, 203) angeordneten Werkstück (2, 202) positionierbar ist.

9. Bearbeitungsmaschine (1) nach einem der vorhergehenden Ansprüche, **dadurch gekennzeichnet, dass** das Bearbeitungswerkzeug (301) in einer ansonsten in Rotation versetzbaren Werkzeugspindel (306) feststehend angeordnet, insbesondere eingespannt und gegen das Werkstück (2, 202) anstellbar ist und/oder der Elektromotor (5, 205, 5a, 205a) für eine Rotation des Werkstückes (2, 202), insbesondere für rotatorische Schleif- oder Drehbearbeitung am Werkstück (2, 202) vorgesehen ist.

10. Bearbeitungsmaschine (1) nach einem der vorhergehenden Ansprüche, **dadurch gekennzeichnet, dass** eine von dem Elektromotor (5, 205, 5a, 205a) angetriebene Motorwelle (50, 250) vorgesehen ist.

11. Bearbeitungsmaschine (1) nach einem der vorhergehenden Ansprüche, **dadurch gekennzeichnet, dass** die Motorwelle (50, 250) über ein Getriebe (54), ein Kraftübertragungsmittel (53) unmittelbar mit dem Spannelement (40, 40', 40a) in Wirkverbindung steht.

12. Bearbeitungsmaschine (1) nach einem der vorhergehenden Ansprüche, **dadurch gekennzeichnet, dass** die Motorwelle (50, 250) einen Adapteranschluss (51, 251) aufweist zur wahlweisen Verbindung der Motorwelle (50, 250) mit einem Kraftübertragungsmittel (53) für die Spannvorrichtung (4) und/oder die Spannelemente (40, 40', 40a) oder zur Verbindung der Motorwelle (50, 250) mit einem Drehfutter (6, 206), welches der mittelbaren oder unmittelbaren Aufnahme des Werkstückes (2, 202) für rotatorische Schleifund/oder Drehbearbeitung am Werkstück (2, 202) dient.

13. Bearbeitungsmaschine (1) nach einem der vorhergehenden Ansprüche, **dadurch gekennzeichnet, dass** jedem Spannelement (40, 40', 40a) je ein Elektromotor (5, 205, 5a, 205a) als Drehantrieb (13) zugeordnet ist.

## Claims

1. Machining unit (1) for the machining of at least one work piece (2, 202), wherein the work piece (2, 202) is held either directly or indirectly by a clamping device (4) in the machining unit (1) on or at a work piece table (3, 203) rotatable around at least one axis, for the machining either a nonrotating machining tool or a machining tool driven rotatable by a tool spindle is provided, the machining tool being held either directly or indirectly in a tool mount by a tool clamping device with the tool clamping device comprising at least one tool clamping element interacting either indirectly or directly with the machining tool, wherein the work piece table (3, 203) is configured moving rotatory around two rotational axes (10, 210, 11, 211) and movable longitudinally along at least one, in particular three spatial axes (10, 210, 11, 211), **characterized in that** at the work piece table (3, 203) at least one electromotor (5, 205, 2a, 205a) is provided with the force (F), turning moment, and/or angular momentum generated thereof acting for either indirect or direct clamping of the work piece (2, 202), and with a clamping force control via the motor current received by the electromotor (5, 205, 5a, 205a) being provided.

2. Machining unit (1) according to claim 1, **characterized in that** the force (F) and/or the turning moment of the electromotor (5, 205, 5a, 205a) is transmittable via a gear (54), a chain, an arrangement of pinions, at least one toothed wheel (43), an angular gear (56) or the like to the work piece (2, 202) and/or the clamping device (4), and/or the electromotor (5, 205, 5a, 205a) is configured integrated stationary within the work piece table (3, 203).

3. Machining unit (1) according to either claim 1 or 2, **characterized in that** the work piece table (3, 203) has a console (30) or a portal, wherein the console (30) or the portal is arranged on a slide or a column (12) of the machining unit (1, 201), and/or the work piece table (3, 203) is rotatable around a first horizontal rotational axis (10, 210) and a second vertical rotational axis (11, 211).

4. Machining unit (1) according to one of the preceding claims, **characterized in that** the electromotor (5, 205, 5a, 205a) is arranged as a central drive (55) acting on several clamping elements (40, 40', 40a) of the clamping device (4), and/or a clamping force that can be impressed on the clamping element (40, 40', 40a) and/or the work piece (2, 202) is limited by a friction clutch, and/or is maintainable by a self-locking gear (54), a self-locking electromotor (5, 205, 5a, 205a) or a brake.

5. Machining unit (1) according to one of the preceding claims, **characterized in that** between the electromotor (5, 205, 5a, 205a) and the clamping device (4) a gear (54) with a gear ratio increasing the turning moment is provided, and/or the clamping device (4) comprises at least one clamping element (40, 40', 40a) interacting either indirectly or directly with the work piece (2, 202), and the electromotor (5, 205, 5a, 205a), being in operative connection with the clamping element (40, 40', 40a), is provided for generating the clamping force.

6. Machining unit (1) according to one of the preceding claims, **characterized in that** the clamping device (4) with individual clamping elements (40, 40', 40a) is configured as a vice and/or a three or more jaw chuck, and/or the clamping elements (40, 40', 40a) having in particular laterally protruding clamping claws (41, 41').

7. Machining unit (1) according to one of the preceding claims, **characterized in that** the clamping element (40, 40', 40a) has a spindle drive for a longitudinal movement of the clamping claws (41, 41').

8. Machining unit (1) according to one of the preceding claims, **characterized in that** a work piece carrier (20) carrying the work piece (2, 202) or a pallet (2a, 20) can be held by means of the clamping device (4), and/or the machining tool (301) can be positioned relative to the work piece (2, 202) arranged on the work piece table (3, 203).

9. Machining unit (1) according to one of the preceding claims, **characterized in that** the machining tool (301) is arranged, in particular clamped stationary in a tool spindle (306) that otherwise is set in rotation, and can be angled against the work piece (2, 202), and/or the electromotor (5, 205, 5a, 205a) is provided for a rotation of the work piece (2, 202) in particular for rotatory grinding or turning machining of the work piece (2, 202).

10. Machining unit (1) according to one of the preceding claims, **characterized in that** a motor shaft (50, 250) driven by the electromotor (5, 205, 5a, 205a) is provided.

11. Machining unit (1) according to one of the preceding claims, **characterized in that** the motor shaft (50, 250) is in direct operative connection with the clamping element (40, 40', 40a) via a gear (54), a power transmission means (53).

12. Machining unit (1) according to one of the preceding claims, **characterized in that** the motor shaft (50, 250) has an adapter fitting (51, 251) for connecting optionally the motor shaft (50, 250) with a power transmission means (53) for the clamping device (4) and/or the clamping elements (40, 40', 40a), or for connecting the motor shaft (50, 250) with a lathe chuck (6, 206) serving for the either indirect or direct fitting of the work piece (2, 202) for rotational grinding and/or turning machining of the work piece (2, 202).

13. Machining unit (1) according to one of the preceding claims, **characterized in that** one electromotor (5, 205, 5a, 205a) as rotational drive (13) is assigned to each clamping element (40, 40', 40a).

## Revendications

1. Machine de traitement destinée à usiner au moins une pièce (2, 202), ladite pièce à usiner (2, 202) étant maintenue directement ou indirectement à l'intérieur de la machine de traitement (1) par un dispositif de serrage (4) sur une table porte-pièce (3,203) rotative autour d'au moins un axe et ladite pièce (2, 202) est usinée par un outil non-rotatif ou par un outil entraîné par un mandrin à mouvement rotatif commandé, de façon à ce que l'outil d'usinage soit maintenu directement ou indirectement à l'intérieur d'un dispositif de réception d'outil par un dispositif de serrage d'outil d'usinage, lequel dispositif comporte au moins un élément de serrage d'outil interagissant directement ou indirectement avec l'outil d'usinage et ladite table porte-pièce (3, 203) est configurée de façon à permettre de tourner autour d'au moins deux axes de rotation (10, 210, 11, 211) et de se déplacer le long d'au moins un axe de l'espace et en particulier le long de trois axes de l'espace (10, 210, 11, 211), **caractérisée en ce qu'**au moins un moteur électrique (5, 205, 5a, 205a) est prévu au niveau de la table porte-pièce (3, 203), dont la force générée (F), le couple de rotation et/ou l'impulsion de rotation sert directement ou indirectement au serrage de la pièce à usiner (2, 202) et **en ce qu'**un contrôle de la force de serrage à l'aide de la mesure du courant est absorbé par le moteur électrique (5, 205, 5a, 205a) est prévu.

2. Machine de traitement (1) selon la revendication 1, **caractérisée en ce que** la force (F) et/ou le couple de rotation du moteur électrique (5, 205, 5a, 205a) peut être transmis vers la pièce à usiner (2, 202) et/ou vers le dispositif de serrage (4) à l'aide d'un engrenage (54), d'une chaîne, d'un agencement de pignons, d'au moins une roue dentée (43), d'un engrenage d'angle (56) ou à l'aide d'un dispositif similaire et/ou **en ce que** le moteur électrique (5, 205, 5a, 205a) est stationnaire et intégré dans la table porte-pièce (3, 203).

3. Machine de traitement (1) selon la revendication 1 ou 2, **caractérisée en ce que** la table porte-pièce (3, 203) possède une console (30) ou un portail de façon à ce que la console (30) ou le portail soit fixé(e) à un coulisseau ou à une colonne (12) de la machine de traitement (1, 201) et/ou **en ce que** la table porte-pièce (3, 203) est configurée de façon à permettre de tourner autour d'un premier axe de rotation horizontal (10, 210) et autour d'un deuxième axe de rotation vertical (11, 211).

4. Machine de traitement (1) selon une des revendications précédentes, **caractérisée en ce que** le moteur électrique (5, 205, 5a, 205a) représente une commande centrale (55) agissant sur plusieurs éléments de serrage (40, 40', 40a) du dispositif de serrage (4) et/ou **en ce que** la force de serrage agissant au niveau de l'élément de serrage (40, 40', 40a) et/ou au niveau de la pièce à usiner (2, 202) peut être limitée par un embrayage à friction et/ou **en ce qu'**elle peut être maintenue à l'aide d'un engrenage autobloquant (54), d'un moteur électrique autobloquant (5, 205, 5a, 205a) ou d'un frein.

5. Machine de traitement (1) selon une des revendications précédentes, **caractérisée en ce qu'**un engrenage (54) avec un rapport de démultiplication augmentant le couple de rotation est situé entre le moteur électrique (5, 205, 5a, 205a) et le dispositif de serrage (4) et/ou **en ce que** le dispositif de serrage (4) comprend au moins un élément de serrage (40, 40', 40a) agissant directement ou indirectement sur la pièce à usiner (2, 202) et **en ce que** le moteur électrique (5, 205, 5a, 205a) agissant sur l'élément de serrage (40, 40', 40a) est prévu comme générateur de la force de serrage.

6. Machine de traitement (1) selon une des revendications précédentes, **caractérisée en ce que** le dispositif de serrage (4) et ses éléments individuels de serrage (40, 40', 40a) sont configurés comme un étau et/ou comme un mandrin à 3 ou plus de 3 mors et/ou **en ce que** les éléments de serrage (40, 40', 40a) possèdent des griffes de serrage (41, 41') qui débordent en particulier latéralement.

7. Machine de traitement (1) selon une des revendications précédentes, **caractérisée en ce que** l'élément de serrage (40, 40', 40a) possède une commande à broche permettant le déplacement longitudinal des griffes de serrage (41, 41').

8. Machine de traitement (1) selon une des revendications précédentes, **caractérisée en ce qu'**un porte-pièce (20) supportant une pièce à usiner (2, 202) ou une palette (2a, 20) peut être immobilisé par le dispositif de serrage (4) et/ou **en ce que** l'outil d'usinage (301) peut être positionné par rapport à la pièce à usiner (2, 202) situé sur la table porte-pièce (3, 203).

9. Machine de traitement (1) selon une des revendications précédentes, **caractérisée en ce que** l'outil d'usinage (301) pouvant être incliné vers la pièce à usiner (2, 202) est immobile et en particulier serré dans le mandrin (306) pouvant être mis en rotation et/ou **en ce que** le moteur électrique (5, 205, 5a, 205a) est prévu pour mettre en rotation la pièce à usiner (2, 202) et ceci, en particulier pour un usinage abrasif rotationnel ou pour un tournage de la pièce à usiner (2, 202).

10. Machine de traitement (1) selon une des revendications précédentes, **caractérisée en ce qu'**un arbre moteur (50, 250) entraîné par le moteur électrique (5, 205, 5a, 205a) est prévu.

11. Machine de traitement (1) selon une des revendications précédentes, **caractérisée en ce que** l'arbre moteur (50, 250) agit directement sur l'élément de serrage (40, 40', 40a) via un engrenage (54) et un moyen de transmission de force (53).

12. Machine de traitement (1) selon une des revendications précédentes, **caractérisée en ce que** l'arbre moteur (50, 250) possède un raccord adaptateur (51, 251) permettant de lier l'arbre moteur (50, 250) au moyen de transmission de force (53) pour le dispositif de serrage (4) et/ou pour les éléments de serrage (40, 40', 40a) ou permettant de lier l'arbre moteur (50, 250) à un mandrin rotatif (6, 206) servant à recevoir directement ou indirectement la pièce à usiner (2, 202) pour l'usinage abrasif rotationnel et/ou pour un tournage de la pièce à usiner (2, 202).

13. Machine de traitement (1) selon une des revendications précédentes, **caractérisée en ce qu'**un moteur électrique (5, 205, 5a, 205a) est attribué à chacun des éléments de serrage (40, 40', 40a) comme moyen d'entraînement rotatif.
